# EUROPEAN PATENT APPLICATION

(11) **EP 4 050 848 A1**
(43) Date of publication of application: **31.08.2022**
(21) Application number: 20886933.9
(22) Date of filing: 12.10.2020
(51) Int. Cl.: H04L 12/24

(54) **METHOD AND DEVICE FOR EXECUTING INTENTION**

(30) Priority: 15.11.2019 CN 201911120447
(71) Applicant: Huawei Technologies Co., Ltd., Shenzhen, Guangdong 518129 (CN)
(72) Inventor: LI, Xianming, Shenzhen, Guangdong 518129 (CN); SU, Qi, Shenzhen, Guangdong 518129 (CN); WANG, Yan, Shenzhen, Guangdong 518129 (CN)
(74) Representative: Epping - Hermann - Fischer
(86) International application number: PCT/CN2020/120378
(87) International publication number: WO 2021/093496

(57) **Abstract**

Embodiments of this application relate to the wireless communication field, and provide an intent execution method and apparatus, so that arrival of an execution condition can be automatically monitored. This simplifies an intent execution process. The method includes: A network management system NMS receives a first intent from a business support system BSS or an operation support system OSS, where the first intent is used to indicate the NMS to perform a management operation on a network, the first intent includes first condition information, and the first condition information is used to indicate a first prerequisite that the network meets before the NMS performs the management operation on the network. The NMS executes the first intent based on the first prerequisite.

## Description

This application claims priority to Chinese Patent Application No. 201911120447.1, filed with the China National Intellectual Property Administration on November 15, 2019 and entitled "INTENT EXECUTION METHOD AND APPARATUS", which is incorporated herein by reference in its entirety.

### TECHNICAL FIELD

This application relates to the wireless communication field, and in particular, to an intent execution method and apparatus.

### BACKGROUND

Currently, research on intent driven management (intent driven management, IDM) is started in stand alone (stand alone, SA) 5 of the 3rd generation partnership project (3rd generation partnership project, 3GPP). A main idea of the IDM is to generate an intent of a communication service provider (communication service provider, CSP) (intent-CSP) in a business support system (business support systems, BSS) or an operation support system (operation support system, OSS). The intent-CSP is used to indicate an effect that the BSS expects a network to achieve (for example, a percentage of users whose data rate is less than 5 Mbps is less than 1%). However, how to implement the intent-CSP is not involved.

To implement the intent-CSP, the BSS may send the intent-CSP to a network management system (network management system, NMS), and the NMS determines an execution policy of the intent-CSP based on the intent-CSP, and executes the execution policy of the intent-CSP. The intent-CSP may be an intent with an execution condition (for example, the intent is triggered when a network performance indicator reaches a threshold), or may be an intent without an execution condition. For the intent-CSP with the execution condition, an administrator needs to continuously monitor whether the execution condition arrives. Once the execution condition arrives, the administrator configures the BSS to deliver the intent-CSP to the NMS. Therefore, the intent-CSP with the execution condition requires participation of the administrator. In addition, if the execution condition occurs for a plurality of times, the administrator needs to configure the BSS for a plurality of times to deliver the intent-CSP to the NMS. This process is complex.

### SUMMARY

Embodiments of this application provide an intent execution method and apparatus, so that arrival of an execution condition can be automatically monitored. This simplifies an intent execution process.

To achieve the foregoing objectives, the following technical solutions are used in embodiments of this application.

According to a first aspect, an embodiment of this application provides an intent execution method. The method includes: An NMS receives a first intent from a BSS, where the first intent is used to indicate the NMS to perform a management operation on a network, the first intent includes first condition information, and the first condition information is used to indicate a first prerequisite that the network meets before the NMS performs the management operation on the network. The NMS executes the first intent based on the first prerequisite.

According to the method provided in the first aspect, the NMS may receive the first intent from the B S S, and execute the first intent based on the first prerequisite indicated in the first condition information included in the first intent, so that arrival of an execution condition can be automatically monitored. This simplifies an intent execution process.

With reference to the first aspect, in a first possible implementation, that the NMS executes the first intent based on the first prerequisite includes: The NMS starts a first process based on the first prerequisite, where the first process is used to monitor whether the network meets the first prerequisite. The NMS executes the first intent according to the first process. According to the foregoing method, after receiving the first intent from the BSS, the NMS may start the first process based on the first prerequisite, and execute the first intent according to the first process. In this way, the NMS can monitor, by using the first process, whether the network meets the first prerequisite. When the network meets the first prerequisite, the NMS executes the first intent; or when the network does not meet the first prerequisite, the NMS does not execute the first intent.

With reference to the first aspect and the first possible implementation of the first aspect, in a second possible implementation, the first intent further includes second condition information, the second condition information is used to indicate a first constraint that the network meets in a process in which the NMS performs the management operation on the network, and that the NMS executes the first intent based on the first prerequisite includes: The NMS translates the first intent into a first execution policy, where the first execution policy is used to: enable the NMS to perform the management operation on the network, and ensure the first constraint in the process in which the NMS performs the management operation on the network. The NMS sends the first execution policy to an EMS when the network meets the first prerequisite. According to the foregoing method, after receiving the first intent from the BSS, the NMS may translate the first intent into the first execution policy, and send the first execution policy to the EMS when the network meets the first prerequisite. In this way, the EMS executes the first execution policy when the network meets the first prerequisite.

With reference to the first aspect and the first possible implementation of the first aspect, in a third possible implementation, the first intent further includes second condition information, the second condition information is used to indicate a first constraint that the network meets in a process in which the NMS performs the management operation on the network, and that the NMS executes the first intent based on the first prerequisite includes: The NMS translates the first intent into a second execution policy and a third execution policy, where the second execution policy is used to enable the NMS to perform the management operation on the network, and the third execution policy is used to ensure the first constraint in the process in which the NMS performs the management operation on the network. The NMS sends the third execution policy to an element management system EMS. The NMS sends the second execution policy to the element management system EMS when the network meets the first prerequisite. According to the foregoing method, after receiving the first intent from the BSS, the NMS may translate the first intent into the second execution policy and the third execution policy, send the third execution policy to the EMS, and send the second execution policy to the EMS when the network meets the first prerequisite. In this way, the EMS executes the second execution policy when the network meets the first prerequisite, and the first constraint is ensured in a process in which the EMS executes the second execution policy.

With reference to the first aspect and the possible implementations of the first aspect, in a fourth possible implementation, the method further includes: The NMS stops maintaining the first intent when the network does not meet the first prerequisite. According to the foregoing method, after receiving the first intent from the BSS, the NMS executes the first intent when the network meets the first prerequisite. Subsequently, when the network does not meet the first prerequisite, the NMS stops maintaining the first intent. In this way, the NMS can automatically monitor arrival of the execution condition. This simplifies the intent execution process.

With reference to the first aspect, in a fifth possible implementation, that the NMS executes the first intent based on the first prerequisite includes: The NMS translates the first intent into a second execution policy, where the second execution policy is used to enable the NMS to perform the management operation on the network. The NMS sends the second execution policy and the first condition information to an element management system EMS. According to the foregoing method, after receiving the first intent from the BSS, the NMS may translate the first intent into the second execution policy, and send the second execution policy and the first condition information to the EMS. In this way, the EMS executes the second execution policy based on the first condition information.

With reference to the fifth possible implementation of the first aspect, in a sixth possible implementation, if the first intent further includes second condition information, and the second condition information is used to indicate a first constraint that the network meets in a process in which the NMS performs the management operation on the network, that the NMS executes the first intent based on the first prerequisite further includes: The NMS sends the second condition information to the EMS. According to the foregoing method, after receiving the first intent from the BSS, the NMS may translate the first intent into the second execution policy, and send the second execution policy, the first condition information, and the second condition information to the EMS. In this way, the EMS executes the second execution policy based on the first condition information, and the first constraint is ensured in a process in which the EMS executes the second execution policy.

With reference to the first aspect and the first possible implementation of the first aspect, in a seventh possible implementation, the method further includes: The NMS receives first intent cancellation request information from the BSS, where the first intent cancellation request information is used to request to stop executing the first intent. The NMS stops the first process based on the first intent cancellation request information. According to the foregoing method, when the BSS determines to cancel the first intent, the NMS receives the first intent cancellation request information from the BSS, and stops the first process based on the first intent cancellation request information. In this way, the NMS can stop monitoring whether the network meets the first prerequisite.

With reference to the third possible implementation of the first aspect, in an eighth possible implementation, the method further includes: The NMS receives second intent cancellation request information from the BSS, where the second intent cancellation request information is used to request to stop executing the first intent. The NMS stops the first process based on the second intent cancellation request information. The NMS generates an intent execution stop policy and an execution stop policy of the first constraint based on the second intent cancellation request information, where the intent execution stop policy is used to indicate to stop executing the second execution policy, and the execution stop policy of the first constraint is used to indicate to stop executing the third execution policy. The NMS sends the intent execution stop policy to the EMS. The NMS sends the execution stop policy of the first constraint to the EMS. According to the foregoing method, when the BSS determines to cancel the first intent, the NMS receives the second intent cancellation request information from the BSS, stops the first process based on the second intent cancellation request information, generates the intent execution stop policy and the execution stop policy of the first constraint based on the second intent cancellation request information, and sends the intent execution stop policy and the execution stop policy of the first constraint to the EMS. In this way, the NMS can stop monitoring whether the network meets the first prerequisite, and the EMS cancels the first intent.

With reference to the first possible implementation and the seventh possible implementation of the first aspect, in a ninth possible implementation, the method further includes: The NMS receives first intent modification request information from the BSS, where the first intent modification request information is used to request to modify the first condition information. The NMS updates the first process based on the first intent modification request information. According to the foregoing method, when the BSS determines to modify the first condition information in the first intent, the NMS may receive the first intent modification request information from the BSS, and update the first process based on the first intent modification request information. In this way, the NMS executes the first intent according to the updated process.

With reference to the second possible implementation of the first aspect, in a tenth possible implementation, the method further includes: The NMS receives second intent modification request information from the BSS, where the second intent modification request information includes third condition information, the third condition information is used to indicate a second constraint that the network meets in the process in which the NMS performs the management operation on the network, and the second constraint is different from the first constraint. The NMS obtains a fourth execution policy through translation based on the second intent modification request information, where the fourth execution policy is used to: enable the NMS to perform the management operation on the network, and ensure the second constraint in the process in which the NMS performs the management operation on the network. The NMS sends the fourth execution policy to the EMS. According to the foregoing method, when the BSS determines to modify the second condition information in the first intent, the NMS may receive the second intent modification request information from the BSS, obtain the fourth execution policy through translation based on the second intent modification request information, and send the fourth execution policy to the EMS. In this way, the EMS executes the fourth execution policy when the network meets the first prerequisite.

With reference to the third possible implementation and the eighth possible implementation of the first aspect, in an eleventh possible implementation, the method further includes: The NMS receives third intent modification request information from the BSS, where the third intent modification request information includes third condition information, the third condition information is used to indicate a second constraint that the network meets in the process in which the NMS performs the management operation on the network, and the second constraint is different from the first constraint. The NMS obtains a fifth execution policy through translation based on the third intent modification request information, where the fifth execution policy is used to ensure the second constraint in the process in which the NMS performs the management operation on the network. The NMS sends the fifth execution policy to the EMS. According to the foregoing method, when the BSS determines to modify the second condition information in the first intent, the NMS may receive the third intent modification request information from the BSS, obtain the fifth execution policy through translation based on the third intent modification request information, and send the fifth execution policy to the EMS. In this way, when the network meets the first prerequisite, the second constraint is ensured in the process in which the NMS performs the management operation on the network.

With reference to the sixth possible implementation of the first aspect, in a twelfth possible implementation, the method further includes: The NMS receives fourth intent modification request information from the BSS, where the fourth intent modification request information includes third condition information and/or fourth condition information, the third condition information is used to indicate a second constraint that the network meets in the process in which the NMS performs the management operation on the network, the fourth condition information is used to indicate a second prerequisite that the network meets before the NMS performs the management operation on the network, the second constraint is different from the first constraint, and the second prerequisite is different from the first prerequisite. The NMS sends the third condition information and/or the fourth condition information to the EMS. According to the foregoing method, when the BSS determines to modify the first condition information and/or the second condition information in the first intent, the NMS may receive the fourth intent modification request information from the BSS, where the fourth intent modification request information includes the third condition information and/or the fourth condition information. The NMS sends the third condition information and/or the fourth condition information to the EMS. In this way, when the network meets the second prerequisite, the second constraint is ensured in the process in which the NMS performs the management operation on the network.

According to a second aspect, an embodiment of this application provides an intent execution method. The method includes: A BSS determines to execute a first intent, where the first intent is used to indicate an NMS to perform a management operation on a network, the first intent includes first condition information, and the first condition information is used to indicate a first prerequisite that the network meets before the NMS performs the management operation on the network. The BSS sends the first intent to the NMS.

According to the method provided in the second aspect, after determining to execute the first intent, the BSS may send the first intent to the NMS. In this way, the NMS executes the first intent when the network meets the first prerequisite.

With reference to the second aspect, in a first possible implementation, the first intent further includes second condition information, and the second condition information is used to indicate a first constraint that the network meets in a process in which the NMS performs the management operation on the network. According to the foregoing method, the first intent sent by the BSS to the NMS may further include the second condition information. In this way, the first constraint is met in a process in which the NMS performs a network management operation on the network.

With reference to the second aspect, in a second possible implementation, the method further includes: The BSS sends first intent modification request information to the NMS, where the first intent modification request information is used to request to modify the first condition information. According to the foregoing method, when the BSS determines to modify the first condition information in the first intent, the BSS may send the first intent modification request information to the NMS. In this way, the first process is updated based on the first intent modification request information.

With reference to the first possible implementation of the second aspect, in a third possible implementation, the method further includes: The BSS sends second intent modification request information to the NMS, where the second intent modification request information includes third condition information, the third condition information is used to indicate a second constraint that the network meets in the process in which the NMS performs the management operation on the network, and the second constraint is different from the first constraint. According to the foregoing method, when the BSS determines to modify the second condition information in the first intent, the BSS may send the second intent modification request information to the NMS. In this way, the NMS obtains a fourth execution policy through translation based on the second intent modification request information, so that the second constraint can be ensured according to the fourth execution policy in the process in which the NMS performs the management operation on the network.

With reference to the first possible implementation of the second aspect, in a fourth possible implementation, the method further includes: The BSS sends fourth intent modification request information to the NMS, where the fourth intent modification request information includes third condition information and/or fourth condition information, the third condition information is used to indicate a second constraint that the network meets in the process in which the NMS performs the management operation on the network, the fourth condition information is used to indicate a second prerequisite that the network meets before the NMS performs the management operation on the network, the second constraint is different from the first constraint, and the second prerequisite is different from the first prerequisite. According to the foregoing method, when the BSS determines to modify the first condition information and/or the second condition information in the first intent, the B S S may send the fourth intent modification request information to the EMS through the NMS. In this way, the EMS modifies the first condition information and/or the second condition information based on the fourth intent modification request information.

According to a third aspect, an embodiment of this application provides an intent execution apparatus. The intent execution apparatus includes a receiving module and a processing module. The receiving module is configured to receive a first intent from a BSS, where the first intent is used to indicate the intent execution apparatus to perform a management operation on a network, the first intent includes first condition information, and the first condition information is used to indicate a first prerequisite that the network meets before the intent execution apparatus performs the management operation on the network. The processing module is configured to execute the first intent based on the first prerequisite.

According to the intent execution apparatus provided in the third aspect, the intent execution apparatus may receive the first intent from the BSS, and execute the first intent based on the first prerequisite indicated in the first condition information included in the first intent, so that arrival of an execution condition can be automatically monitored. This simplifies an intent execution process.

With reference to the third aspect, in a first possible implementation, the processing module is specifically configured to start a first process based on the first prerequisite, where the first process is used to monitor whether the network meets the first prerequisite. The processing module is further specifically configured to execute the first intent according to the first process. According to the intent execution apparatus, after receiving the first intent from the BSS, the intent execution apparatus may start the first process based on the first prerequisite, and execute the first intent according to the first process. In this way, the intent execution apparatus can monitor, by using the first process, whether the network meets the first prerequisite. When the network meets the first prerequisite, the intent execution apparatus executes the first intent; or when the network does not meet the first prerequisite, the intent execution apparatus does not execute the first intent.

With reference to the third aspect and the first possible implementation of the third aspect, in a second possible implementation, the first intent further includes second condition information, and the second condition information is used to indicate a first constraint that the network meets in a process in which the intent execution apparatus performs the management operation on the network. The processing module is specifically configured to translate the first intent into a first execution policy, where the first execution policy is used to: enable the intent execution apparatus to perform the management operation on the network, and ensure the first constraint in the process in which the intent execution apparatus performs the management operation on the network. The processing module is further specifically configured to send the first execution policy to an element management system EMS when the network meets the first prerequisite. According to the intent execution apparatus, after receiving the first intent from the BSS, the intent execution apparatus may translate the first intent into the first execution policy, and send the first execution policy to the EMS when the network meets the first prerequisite. In this way, the EMS executes the first execution policy when the network meets the first prerequisite.

With reference to the third aspect and the first possible implementation of the third aspect, in a third possible implementation, the first intent further includes second condition information, and the second condition information is used to indicate a first constraint that the network meets in a process in which the intent execution apparatus performs the management operation on the network. The processing module is specifically configured to translate the first intent into a second execution policy and a third execution policy, where the second execution policy is used to enable the intent execution apparatus to perform the management operation on the network, and the third execution policy is used to ensure the first constraint in the process in which the intent execution apparatus performs the management operation on the network. The processing module is further specifically configured to send the third execution policy to an element management system EMS. The processing module is further specifically configured to send the second execution policy to the element management system EMS when the network meets the first prerequisite. According to the intent execution apparatus, after receiving the first intent from the BSS, the intent execution apparatus may translate the first intent into the second execution policy and the third execution policy, send the third execution policy to the EMS, and send the second execution policy to the EMS when the network meets the first prerequisite. In this way, the EMS executes the second execution policy when the network meets the first prerequisite, and the first constraint is ensured in a process in which the EMS executes the second execution policy.

With reference to the third aspect and the possible implementations of the third aspect, in a fourth possible implementation, the processing module is further configured to stop maintaining the first intent when the network does not meet the first prerequisite. According to the intent execution apparatus, after receiving the first intent from the BSS, the intent execution apparatus executes the first intent when the network meets the first prerequisite. Subsequently, when the network does not meet the first prerequisite, the intent execution apparatus stops maintaining the first intent. In this way, the intent execution apparatus can automatically monitor arrival of the execution condition. This simplifies the intent execution process.

With reference to the third aspect, in a fifth possible implementation, the processing module is specifically configured to translate the first intent into a second execution policy, where the second execution policy is used to enable the intent execution apparatus to perform the management operation on the network. The processing module is further specifically configured to send the second execution policy and the first condition information to an element management system EMS. According to the intent execution apparatus, after receiving the first intent from the BSS, the intent execution apparatus may translate the first intent into the second execution policy, and send the second execution policy and the first condition information to the EMS. In this way, the EMS executes the second execution policy based on the first condition information.

With reference to the fifth possible implementation of the third aspect, in a sixth possible implementation, if the first intent further includes second condition information, and the second condition information is used to indicate a first constraint that the network meets in a process in which the intent execution apparatus performs the management operation on the network, the processing module is further specifically configured to send the second condition information to the EMS. According to the intent execution apparatus, after receiving the first intent from the BSS, the intent execution apparatus may translate the first intent into the second execution policy, and send the second execution policy, the first condition information, and the second condition information to the EMS. In this way, the EMS executes the second execution policy based on the first condition information, and the first constraint is ensured in a process in which the EMS executes the second execution policy.

With reference to the third aspect and the first possible implementation of the third aspect, in a seventh possible implementation, the receiving module is further configured to receive first intent cancellation request information from the BSS, where the first intent cancellation request information is used to request to stop executing the first intent. The processing module is further configured to stop the first process based on the first intent cancellation request information. According to the intent execution apparatus, when the BSS determines to cancel the first intent, the intent execution apparatus receives the first intent cancellation request information from the BSS, and stops the first process based on the first intent cancellation request information. In this way, the intent execution apparatus can stop monitoring whether the network meets the first prerequisite.

With reference to the third possible implementation of the third aspect, in an eighth possible implementation, the intent execution apparatus further includes a sending module. The receiving module is further configured to receive second intent cancellation request information from the BSS, where the second intent cancellation request information is used to request to stop executing the first intent. The processing module is further configured to stop the first process based on the second intent cancellation request information. The processing module is further configured to generate an intent execution stop policy and an execution stop policy of the first constraint based on the second intent cancellation request information, where the intent execution stop policy is used to indicate to stop executing the second execution policy, and the execution stop policy of the first constraint is used to indicate to stop executing the third execution policy. The sending module is configured to send the intent execution stop policy to the EMS. The sending module is further configured to send the execution stop policy of the first constraint to the EMS. According to the intent execution apparatus, when the BSS determines to cancel the first intent, the intent execution apparatus receives the second intent cancellation request information from the BSS, stops the first process based on the second intent cancellation request information, generates the intent execution stop policy and the execution stop policy of the first constraint based on the second intent cancellation request information, and sends the intent execution stop policy and the execution stop policy of the first constraint to the EMS. In this way, the intent execution apparatus can stop monitoring whether the network meets the first prerequisite, and the EMS cancels the first intent.

With reference to the first possible implementation and the seventh possible implementation of the third aspect, in a ninth possible implementation, the receiving module is further configured to receive first intent modification request information from the BSS, where the first intent modification request information is used to request to modify the first condition information. The processing module is further configured to update the first process based on the first intent modification request information. According to the intent execution apparatus, when the BSS determines to modify the first condition information in the first intent, the intent execution apparatus may receive the first intent modification request information from the BSS, and update the first process based on the first intent modification request information. In this way, the intent execution apparatus executes the first intent according to the updated process.

With reference to the second possible implementation of the third aspect, in a tenth possible implementation, the intent execution apparatus further includes a sending module. The receiving module is further configured to receive second intent modification request information from the BSS, where the second intent modification request information includes third condition information, the third condition information is used to indicate a second constraint that the network meets in the process in which the intent execution apparatus performs the management operation on the network, and the second constraint is different from the first constraint. The processing module is further configured to obtain a fourth execution policy through translation based on the second intent modification request information, where the fourth execution policy is used to: enable the intent execution apparatus to perform the management operation on the network, and ensure the second constraint in the process in which the intent execution apparatus performs the management operation on the network. The sending module is configured to send the fourth execution policy to the EMS. According to the intent execution apparatus, when the BSS determines to modify the second condition information in the first intent, the intent execution apparatus may receive the second intent modification request information from the BSS, obtain the fourth execution policy through translation based on the second intent modification request information, and send the fourth execution policy to the EMS. In this way, the EMS executes the fourth execution policy when the network meets the first prerequisite.

With reference to the third possible implementation and the eighth possible implementation of the third aspect, in an eleventh possible implementation, the intent execution apparatus further includes a sending module. The receiving module is further configured to receive third intent modification request information from the BSS, where the third intent modification request information includes third condition information, the third condition information is used to indicate a second constraint that the network meets in the process in which the intent execution apparatus performs the management operation on the network, and the second constraint is different from the first constraint. The processing module is further configured to obtain a fifth execution policy through translation based on the third intent modification request information, where the fifth execution policy is used to ensure the second constraint in the process in which the intent execution apparatus performs the management operation on the network. The sending module is further configured to send the fifth execution policy to the EMS. According to the intent execution apparatus, when the BSS determines to modify the second condition information in the first intent, the intent execution apparatus may receive the third intent modification request information from the BSS, obtain the fifth execution policy through translation based on the third intent modification request information, and send the fifth execution policy to the EMS. In this way, when the network meets the first prerequisite, the second constraint is ensured in the process in which the intent execution apparatus performs the management operation on the network.

With reference to the sixth possible implementation of the third aspect, in a twelfth possible implementation, the intent execution apparatus further includes a sending module. The receiving module is further configured to receive fourth intent modification request information from the BSS, where the fourth intent modification request information includes third condition information and/or fourth condition information, the third condition information is used to indicate a second constraint that the network meets in the process in which the intent execution apparatus performs the management operation on the network, the fourth condition information is used to indicate a second prerequisite that the network meets before the intent execution apparatus performs the management operation on the network, the second constraint is different from the first constraint, and the second prerequisite is different from the first prerequisite. The sending module is configured to send the third condition information and/or the fourth condition information to the EMS. According to the intent execution apparatus, when the BSS determines to modify the first condition information and/or the second condition information in the first intent, the intent execution apparatus may receive the fourth intent modification request information from the BSS, where the fourth intent modification request information includes the third condition information and/or the fourth condition information. The intent execution apparatus sends the third condition information and/or the fourth condition information to the EMS. In this way, when the network meets the second prerequisite, the second constraint is ensured in the process in which the intent execution apparatus performs the management operation on the network.

According to a fourth aspect, an embodiment of this application provides an intent execution apparatus. The intent execution apparatus includes a processing module and a sending module. The processing module is configured to determine to execute a first intent, where the first intent is used to indicate an NMS to perform a management operation on a network, the first intent includes first condition information, and the first condition information is used to indicate a first prerequisite that the network meets before the NMS performs the management operation on the network. The sending module is configured to send the first intent to the NMS.

According to the intent execution apparatus provided in the fourth aspect, after determining to execute the first intent, the intent execution apparatus may send the first intent to the NMS. In this way, the NMS executes the first intent when the network meets the first prerequisite.

With reference to the fourth aspect, in a first possible implementation, the first intent further includes second condition information, and the second condition information is used to indicate a first constraint that the network meets in a process in which the NMS performs the management operation on the network. According to the intent execution apparatus, the first intent sent by the intent execution apparatus to the NMS may further include the second condition information. In this way, the first constraint is met in a process in which the NMS performs a network management operation on the network.

With reference to the fourth aspect, in a second possible implementation, the sending module is further configured to send first intent modification request information to the NMS, where the first intent modification request information is used to request to modify the first condition information. According to the intent execution apparatus, when the intent execution apparatus determines to modify the first condition information in the first intent, the intent execution apparatus may send the first intent modification request information to the NMS. In this way, the first process is updated based on the first intent modification request information.

With reference to the first possible implementation of the fourth aspect, in a third possible implementation, the sending module is further configured to send second intent modification request information to the NMS, where the second intent modification request information includes third condition information, the third condition information is used to indicate a second constraint that the network meets in the process in which the NMS performs the management operation on the network, and the second constraint is different from the first constraint. According to the intent execution apparatus, when the intent execution apparatus determines to modify the second condition information in the first intent, the intent execution apparatus may send the second intent modification request information to the NMS. In this way, the NMS obtains a fourth execution policy through translation based on the second intent modification request information, so that the second constraint can be ensured according to the fourth execution policy in the process in which the NMS performs the management operation on the network.

With reference to the first possible implementation of the fourth aspect, in a fourth possible implementation, the sending module is further configured to send fourth intent modification request information to the NMS, where the fourth intent modification request information includes third condition information and/or fourth condition information, the third condition information is used to indicate a second constraint that the network meets in the process in which the NMS performs the management operation on the network, the fourth condition information is used to indicate a second prerequisite that the network meets before the NMS performs the management operation on the network, the second constraint is different from the first constraint, and the second prerequisite is different from the first prerequisite. According to the intent execution apparatus, when the intent execution apparatus determines to modify the first condition information and/or the second condition information in the first intent, the intent execution apparatus may send the fourth intent modification request information to the EMS through the NMS. In this way, the EMS modifies the first condition information and/or the second condition information based on the fourth intent modification request information.

According to a fifth aspect, an embodiment of this application provides an intent execution apparatus. The intent execution apparatus includes at least one processor, at least one memory, and a communication interface. The communication interface, the at least one memory, and the at least one processor are coupled. The intent execution apparatus communicates with another device by using the communication interface. The at least one memory is configured to store a computer program, so that when the computer program is executed by the at least one processor, the intent execution method according to the first aspect and the possible implementations of the first aspect is implemented.

According to a sixth aspect, an embodiment of this application provides an intent execution apparatus. The intent execution apparatus includes at least one processor, at least one memory, and a communication interface. The communication interface, the at least one memory, and the at least one processor are coupled. The intent execution apparatus communicates with another device by using the communication interface. The at least one memory is configured to store a computer program, so that when the computer program is executed by the at least one processor, the intent execution method according to the second aspect and the possible implementations of the second aspect is implemented.

According to a seventh aspect, this application provides a system chip. The system chip may be used in an intent execution apparatus. The system chip includes at least one processor. Related program instructions are executed by the at least one processor, to implement a function of the NMS in the method according to any one of the first aspect and the designs of the first aspect. Optionally, the system chip may further include at least one memory, and the memory stores the related program instructions.

According to an eighth aspect, this application provides a system chip. The system chip may be used in an intent execution apparatus. The system chip includes at least one processor. Related program instructions are executed by the at least one processor, to implement a function of the BSS in the method according to any one of the second aspect and the designs of the second aspect. Optionally, the system chip may further include at least one memory, and the memory stores the related program instructions.

According to a ninth aspect, an embodiment of this application provides a computer-readable storage medium, for example, a non-transient computer-readable storage medium. The computer-readable storage medium stores a computer program. When the computer program is run on a computer, the computer is enabled to perform any possible method according to the first aspect. For example, the computer may be at least one storage node.

According to a tenth aspect, an embodiment of this application provides a computer-readable storage medium, for example, a non-transient computer-readable storage medium. The computer-readable storage medium stores a computer program. When the computer program is run on a computer, the computer is enabled to perform any possible method according to the second aspect. For example, the computer may be at least one storage node.

According to an eleventh aspect, an embodiment of this application provides a computer program product. When the computer program product runs on a computer, any method provided in the first aspect is performed. For example, the computer may be at least one storage node.

According to a twelfth aspect, an embodiment of this application provides a computer program product. When the computer program product runs on a computer, any method provided in the second aspect is performed. For example, the computer may be at least one storage node.

According to a thirteenth aspect, an embodiment of this application provides an intent execution system. The intent execution system may include any one or more of the following: the intent execution apparatus according to the third aspect, the intent execution apparatus according to the fourth aspect, the intent execution apparatus according to the fifth aspect, the intent execution apparatus according to the sixth aspect, the system chip according to the seventh aspect, the system chip according to the eighth aspect, the computer-readable storage medium according to the ninth aspect, the computer-readable storage medium according to the tenth aspect, the computer program product according to the eleventh aspect, or the computer program product according to the twelfth aspect.

It may be understood that any one of the intent execution apparatus, the system chip, the computer-readable storage medium, the computer program product, the intent execution system, or the like provided above is configured to perform a corresponding method provided above. Therefore, for beneficial effects that can be achieved by the intent execution apparatus, the system chip, the computer-readable storage medium, the computer program product, the intent execution system, or the like, refer to beneficial effects in the corresponding method. Details are not described herein.

According to a fourteenth aspect, an embodiment of this application provides an intent execution method. The method includes: An NMS receives a first intent from a BSS, where the first intent is used to indicate the NMS to perform a management operation on a network, the first intent includes second condition information, and the second condition information is used to indicate a first constraint that the network meets in a process in which the NMS performs the management operation on the network. The NMS executes the first intent based on the first constraint.

According to the method provided in the fourteenth aspect, the NMS may receive the first intent from the BSS, and execute the first intent based on the first constraint indicated in the second condition information included in the first intent, so that the first constraint can be ensured in the process in which the NMS performs the management operation on the network.

With reference to the fourteenth aspect, in a first possible implementation, that the NMS executes the first intent based on the first constraint includes: The NMS translates the first intent into a first execution policy, where the first execution policy is used to: enable the NMS to perform the management operation on the network, and ensure the first constraint in the process in which the NMS performs the management operation on the network. The NMS sends the first execution policy to an element management system EMS. According to the foregoing method, after receiving the first intent from the BSS, the NMS may translate the first intent into the first execution policy, and send the first execution policy to the EMS. In this way, the EMS executes the first execution policy, and the first constraint is ensured in the process in which the NMS performs the management operation on the network.

With reference to the fourteenth aspect, in a second possible implementation, that the NMS executes the first intent based on the first constraint includes: The NMS translates the first intent into a second execution policy and a third execution policy, where the second execution policy is used to enable the NMS to perform the management operation on the network, and the third execution policy is used to ensure the first constraint in the process in which the NMS performs the management operation on the network. The NMS sends the third execution policy to an element management system EMS. The NMS sends the second execution policy to the element management system EMS. According to the foregoing method, after receiving the first intent from the BSS, the NMS may translate the first intent into the second execution policy and the third execution policy, and send the second execution policy and the third execution policy to the EMS. In this way, the EMS executes the second execution policy, and the first constraint is ensured in a process in which the EMS executes the second execution policy.

With reference to the fourteenth aspect, in a third possible implementation, that the NMS executes the first intent based on the first constraint includes: The NMS translates the first intent into a second execution policy, where the second execution policy is used to enable the NMS to perform the management operation on the network. The NMS sends the second execution policy and the second condition information to an element management system EMS. According to the foregoing method, after receiving the first intent from the BSS, the NMS may translate the first intent into the second execution policy, and send the second execution policy and the second condition information to the EMS. In this way, the EMS executes the second execution policy, and the first constraint is ensured in a process in which the EMS executes the second execution policy.

With reference to the fourteenth aspect and the possible implementations of the fourteenth aspect, in a fourth possible implementation, the first intent further includes first condition information, and the first condition information is used to indicate a first prerequisite that the network meets before the NMS performs the management operation on the network. According to the foregoing method, the first intent received by the NMS further includes the first condition information. In this way, the NMS may execute the first intent based on the first condition information, so that arrival of an execution condition can be automatically monitored. This simplifies an intent execution process.

With reference to the fourth possible implementation of the fourteenth aspect, in a fifth possible implementation, the method further includes: The NMS starts a first process based on the first condition information, where the first process is used by the NMS to monitor whether the network meets the first prerequisite. According to the foregoing method, when the first intent includes the first condition information, the NMS may start the first process based on the first condition information, and execute the first intent according to the first process, so that arrival of the execution condition can be automatically monitored. This simplifies the intent execution process.

With reference to the fourth possible implementation and the fifth possible implementation of the fourteenth aspect, in a sixth possible implementation, the method further includes: The NMS stops maintaining the first intent when the network does not meet the first prerequisite. According to the foregoing method, when the network does not meet the first prerequisite, the NMS may stop maintaining the first intent, so that arrival of the execution condition can be automatically monitored. This simplifies the intent execution process.

With reference to the third possible implementation of the fourteenth aspect, in a seventh possible implementation, the first intent further includes first condition information, and the first condition information is used to indicate a first prerequisite that the network meets before the NMS performs the management operation on the network. That the NMS executes the first intent based on the first constraint further includes: The NMS sends the first condition information to the element management system EMS. According to the foregoing method, after receiving the first intent sent by the BSS, the NMS may translate the first intent into the second execution policy, and send the second execution policy, the first condition information, and the second condition information to the EMS. In this way, the EMS executes the second execution policy based on the first condition information, and the first constraint is ensured in the process in which the EMS executes the second execution policy.

With reference to the second possible implementation of the fourteenth aspect, in an eighth possible implementation, the method further includes: The NMS receives fifth intent cancellation request information from the BSS, where the fifth intent cancellation request information is used to request to stop executing the first intent. The NMS generates an intent execution stop policy and an execution stop policy of the first constraint based on the fifth intent cancellation request information, where the intent execution stop policy is used to indicate to stop executing the second execution policy, and the execution stop policy of the first constraint is used to indicate to stop executing the third execution policy. The NMS sends the intent execution stop policy to the EMS. The NMS sends the execution stop policy of the first constraint to the EMS. According to the foregoing method, when the BSS determines to cancel the first intent, the NMS receives the fifth intent cancellation request information from the BSS, generates the intent execution stop policy and the execution stop policy of the first constraint based on the fifth intent cancellation request information, and sends the intent execution stop policy and the execution stop policy of the first constraint to the EMS. In this way, the EMS stops the second execution policy according to the intent execution stop policy, and stops the third execution policy according to the execution stop policy of the first constraint.

With reference to the first possible implementation of the fourteenth aspect, in a ninth possible implementation, the method further includes: The NMS receives second intent modification request information from the BSS, where the second intent modification request information includes third condition information, the third condition information is used to indicate a second constraint that the network meets in the process in which the NMS performs the management operation on the network, and the second constraint is different from the first constraint. The NMS obtains a fourth execution policy through translation based on the second intent modification request information, where the fourth execution policy is used to: enable the NMS to perform the management operation on the network, and ensure the second constraint in the process in which the NMS performs the management operation on the network. The NMS sends the fourth execution policy to the EMS. According to the foregoing method, when the BSS determines to modify the second condition information in the first intent, the NMS receives the second intent modification request information sent by the BSS, obtains the fourth execution policy through translation based on the second intent modification request information, and sends the fourth execution policy to the EMS. In this way, the EMS executes the fourth execution policy.

With reference to the second possible implementation and the eighth possible implementation of the fourteenth aspect, in a tenth possible implementation, the method further includes: The NMS receives third intent modification request information from the BSS, where the third intent modification request information includes third condition information, the third condition information is used to indicate a second constraint that the network meets in the process in which the NMS performs the management operation on the network, and the second constraint is different from the first constraint. The NMS obtains a fifth execution policy through translation based on the third intent modification request information, where the fifth execution policy is used to ensure the second constraint in the process in which the NMS performs the management operation on the network. The NMS sends the fifth execution policy to the EMS. According to the foregoing method, when the BSS determines to modify the second condition information in the first intent, the NMS may receive the third intent modification request information from the BSS, obtain the fifth execution policy through translation based on the third intent modification request information, and send the fifth execution policy to the EMS. In this way, the second constraint is ensured in the process in which the NMS performs the management operation on the network.

With reference to the third possible implementation of the fourteenth aspect, in an eleventh possible implementation, the method further includes: The NMS receives fourth intent modification request information from the BSS, where the fourth intent modification request information includes third condition information, the third condition information is used to indicate a second constraint that the network meets in the process in which the NMS performs the management operation on the network, and the second constraint is different from the first constraint. The NMS sends the third condition information to the EMS. According to the foregoing method, when the BSS determines to modify the second condition information in the first intent, the NMS may receive the fourth intent modification request information from the BSS, where the fourth intent modification request information includes the third condition information. The NMS sends the third condition information to the EMS. In this way, the second constraint is ensured in the process in which the NMS performs the management operation on the network.

With reference to the fifth possible implementation and the sixth possible implementation of the fourteenth aspect, in a twelfth possible implementation, the method further includes: The NMS receives first intent modification request information from the BSS, where the first intent modification request information is used to request to modify the first condition information. The NMS updates the first process based on the first intent modification request information. According to the foregoing method, when the BSS determines to modify the first condition information in the first intent, the NMS may receive the first intent modification request information from the BSS, and update the first process based on the first intent modification request information. In this way, the NMS executes the first intent according to the updated process.

With reference to the seventh possible implementation of the fourteenth aspect, in a thirteenth possible implementation, the method further includes: The NMS receives fourth intent modification request information from the BSS, where the fourth intent modification request information includes fourth condition information, the fourth condition information is used to indicate a second prerequisite that the network meets before the NMS performs the management operation on the network, and the second prerequisite is different from the first prerequisite. The NMS sends the fourth condition information to the EMS. According to the foregoing method, when the BSS determines to modify the first condition information in the first intent, the NMS may receive the fourth intent modification request information from the BSS, where the fourth intent modification request information includes the fourth condition information. The NMS sends the fourth condition information to the EMS. In this way, when the network meets the second prerequisite, the NMS performs the management operation on the network.

According to a fifteenth aspect, an embodiment of this application provides an intent execution method. The method includes: A BSS determines to execute a first intent, where the first intent is used to indicate an NMS to perform a management operation on a network, the first intent includes second condition information, and the second condition information is used to indicate a first constraint that the network meets in a process in which the NMS performs the management operation on the network. The BSS sends the first intent to the NMS.

According to the method provided in the fifteenth aspect, after determining to execute the first intent, the BSS may send the first intent to the NMS. In this way, the NMS executes the first intent based on the second condition information.

With reference to the fifteenth aspect, in a first possible implementation, the first intent further includes first condition information, and the first condition information is used to indicate a first prerequisite that the network meets before the NMS performs the management operation on the network. According to the foregoing method, the first intent sent by the BSS to the NMS further includes the first condition information. In this way, the NMS executes the first intent based on the second condition information when the network meets the first prerequisite.

With reference to the fifteenth aspect, in a second possible implementation scenario, the method further includes: The BSS sends fifth intent cancellation request information to the NMS, where the fifth intent cancellation request information is used to request to stop executing the first intent. According to the foregoing method, when the BSS determines to cancel the first intent, the BSS may send the fifth intent cancellation request information to the NMS. In this way, the NMS cancels the first intent based on the fifth intent cancellation request information.

With reference to the fifteenth aspect, in a third possible implementation, the method further includes: The BSS sends second intent modification request information to the NMS, where the second intent modification request information includes third condition information, the third condition information is used to indicate a second constraint that the network meets in the process in which the NMS performs the management operation on the network, and the second constraint is different from the first constraint. According to the foregoing method, when the BSS determines to modify the second condition information in the first intent, the BSS may send the second intent modification request information to the NMS. In this way, the NMS may modify the second condition information in the first intent based on the second intent modification request information.

With reference to the first possible implementation of the fifteenth aspect, in a fourth possible implementation, the method further includes: The BSS sends first intent modification request information to the NMS, where the first intent modification request information is used to request to modify the first condition information. According to the foregoing method, when the BSS determines to modify the first condition information in the first intent, the BSS may send the first intent modification request information to the NMS. In this way, the NMS may modify the first condition information in the first intent based on the first intent modification request information.

With reference to the first possible implementation of the fifteenth aspect, in a fourth possible implementation, the method further includes: The BSS sends fourth intent modification request information to the NMS, where the fourth intent modification request information includes fourth condition information, the fourth condition information is used to indicate a second prerequisite that the network meets before the NMS performs the management operation on the network, and the second prerequisite is different from the first prerequisite. According to the foregoing method, when the BSS determines to modify the first condition information in the first intent, the BSS may send the fourth intent modification request information to the NMS. In this way, the NMS may execute the first intent based on the fourth condition information.

According to a sixteenth aspect, an embodiment of this application provides an intent execution apparatus. The intent execution apparatus includes a receiving module and a processing module. The receiving module is configured to receive a first intent from a BSS, where the first intent is used to indicate the intent execution apparatus to perform a management operation on a network, the first intent includes second condition information, and the second condition information is used to indicate a first constraint that the network meets in a process in which the intent execution apparatus performs the management operation on the network. The processing module is configured to execute the first intent based on the first constraint.

According to the intent execution apparatus provided in the sixteenth aspect, the intent execution apparatus may receive the first intent from the BSS, and execute the first intent based on the first constraint indicated in the second condition information included in the first intent, so that the first constraint can be ensured in the process in which the intent execution apparatus performs the management operation on the network.

With reference to the sixteenth aspect, in a first possible implementation, the processing module is specifically configured to translate the first intent into a first execution policy, where the first execution policy is used to: enable the intent execution apparatus to perform the management operation on the network, and ensure the first constraint in the process in which the intent execution apparatus performs the management operation on the network. The processing module is further specifically configured to send the first execution policy to an element management system EMS. According to the intent execution apparatus, after receiving the first intent from the BSS, the intent execution apparatus may translate the first intent into the first execution policy, and send the first execution policy to the EMS. In this way, the EMS executes the first execution policy, and the first constraint is ensured in the process in which the intent execution apparatus performs the management operation on the network.

With reference to the sixteenth aspect, in a second possible implementation, the processing module is specifically configured to translate the first intent into a second execution policy and a third execution policy, where the second execution policy is used to enable the intent execution apparatus to perform the management operation on the network, and the third execution policy is used to ensure the first constraint in the process in which the intent execution apparatus performs the management operation on the network. The processing module is further specifically configured to send the third execution policy to an element management system EMS. The processing module is further specifically configured to send the second execution policy to the element management system EMS. According to the intent execution apparatus, after receiving the first intent from the BSS, the intent execution apparatus may translate the first intent into the second execution policy and the third execution policy, and send the second execution policy and the third execution policy to the EMS. In this way, the EMS executes the second execution policy, and the first constraint is ensured in a process in which the EMS executes the second execution policy.

With reference to the sixteenth aspect, in a third possible implementation, the processing module is specifically configured to translate the first intent into a second execution policy, where the second execution policy is used to enable the intent execution apparatus to perform the management operation on the network. The processing module is further specifically configured to send the second execution policy and the second condition information to an element management system EMS. According to the intent execution apparatus, after receiving the first intent from the BSS, the intent execution apparatus may translate the first intent into the second execution policy, and send the second execution policy and the second condition information to the EMS. In this way, the EMS executes the second execution policy, and the first constraint is ensured in a process in which the EMS executes the second execution policy.

With reference to the sixteenth aspect and the possible implementations of the sixteenth aspect, in a fourth possible implementation, the first intent further includes first condition information, and the first condition information is used to indicate a first prerequisite that the network meets before the intent execution apparatus performs the management operation on the network. According to the intent execution apparatus, the first intent received by the intent execution apparatus further includes the first condition information. In this way, the intent execution apparatus may execute the first intent based on the first condition information, so that arrival of an execution condition can be automatically monitored. This simplifies an intent execution process.

With reference to the fourth possible implementation of the sixteenth aspect, in a fifth possible implementation, the processing module is further configured to start a first process based on the first condition information, where the first process is used by the intent execution apparatus to monitor whether the network meets the first prerequisite. According to the intent execution apparatus, when the first intent includes the first condition information, the intent execution apparatus may start the first process based on the first condition information, and execute the first intent according to the first process, so that arrival of the execution condition can be automatically monitored. This simplifies the intent execution process.

With reference to the fourth possible implementation and the fifth possible implementation of the sixteenth aspect, in a sixth possible implementation, the processing module is further configured to stop maintaining the first intent when the network does not meet the first prerequisite. According to the intent execution apparatus, when the network does not meet the first prerequisite, the intent execution apparatus may stop maintaining the first intent, so that arrival of the execution condition can be automatically monitored. This simplifies the intent execution process.

With reference to the third possible implementation of the sixteenth aspect, in a seventh possible implementation, the first intent further includes first condition information, and the first condition information is used to indicate a first prerequisite that the network meets before the intent execution apparatus performs the management operation on the network. The processing module is specifically configured to send the first condition information to the element management system EMS. According to the intent execution apparatus, after receiving the first intent sent by the BSS, the intent execution apparatus may translate the first intent into the second execution policy, and send the second execution policy, the first condition information, and the second condition information to the EMS. In this way, the EMS executes the second execution policy based on the first condition information, and the first constraint is ensured in the process in which the EMS executes the second execution policy.

With reference to the second possible implementation of the sixteenth aspect, in an eighth possible implementation, the intent execution apparatus further includes a sending module. The receiving module is further configured to receive fifth intent cancellation request information from the BSS, where the fifth intent cancellation request information is used to request to stop executing the first intent. The processing module is further configured to generate an intent execution stop policy and an execution stop policy of the first constraint based on the fifth intent cancellation request information, where the intent execution stop policy is used to indicate to stop executing the second execution policy, and the execution stop policy of the first constraint is used to indicate to stop executing the third execution policy. The sending module is configured to send the intent execution stop policy to the EMS. The sending module is further configured to send the execution stop policy of the first constraint to the EMS. According to the intent execution apparatus, when the BSS determines to cancel the first intent, the intent execution apparatus receives the fifth intent cancellation request information from the BSS, generates the intent execution stop policy and the execution stop policy of the first constraint based on the fifth intent cancellation request information, and sends the intent execution stop policy and the execution stop policy of the first constraint to the EMS. In this way, the EMS stops the second execution policy according to the intent execution stop policy, and stops the third execution policy according to the execution stop policy of the first constraint.

With reference to the first possible implementation of the sixteenth aspect, in a ninth possible implementation, the intent execution apparatus further includes a sending module. The receiving module is further configured to receive second intent modification request information from the BSS, where the second intent modification request information includes third condition information, the third condition information is used to indicate a second constraint that the network meets in the process in which the intent execution apparatus performs the management operation on the network, and the second constraint is different from the first constraint. The processing module is further configured to obtain a fourth execution policy through translation based on the second intent modification request information, where the fourth execution policy is used to: enable the intent execution apparatus to perform the management operation on the network, and ensure the second constraint in the process in which the intent execution apparatus performs the management operation on the network. The sending module is configured to send the fourth execution policy to the EMS. According to the intent execution apparatus, when the BSS determines to modify the second condition information in the first intent, the intent execution apparatus receives the second intent modification request information sent by the BSS, obtains the fourth execution policy through translation based on the second intent modification request information, and sends the fourth execution policy to the EMS. In this way, the EMS executes the fourth execution policy.

With reference to the second possible implementation and the eighth possible implementation of the sixteenth aspect, in a tenth possible implementation, the intent execution apparatus further includes a sending module. The receiving module is configured to receive third intent modification request information from the BSS, where the third intent modification request information includes third condition information, the third condition information is used to indicate a second constraint that the network meets in the process in which the intent execution apparatus performs the management operation on the network, and the second constraint is different from the first constraint. The processing module is further configured to obtain a fifth execution policy through translation based on the third intent modification request information, where the fifth execution policy is used to ensure the second constraint in the process in which the intent execution apparatus performs the management operation on the network. The sending module is configured to send the fifth execution policy to the EMS. According to the intent execution apparatus, when the BSS determines to modify the second condition information in the first intent, the intent execution apparatus may receive the third intent modification request information from the BSS, obtain the fifth execution policy through translation based on the third intent modification request information, and send the fifth execution policy to the EMS. In this way, the second constraint is ensured in the process in which the intent execution apparatus performs the management operation on the network.

With reference to the third possible implementation of the sixteenth aspect, in an eleventh possible implementation, the intent execution apparatus further includes a sending module. The receiving module is further configured to receive fourth intent modification request information from the BSS, where the fourth intent modification request information includes third condition information, the third condition information is used to indicate a second constraint that the network meets in the process in which the intent execution apparatus performs the management operation on the network, and the second constraint is different from the first constraint. The sending module is configured to send the third condition information to the EMS. According to the intent execution apparatus, when the BSS determines to modify the second condition information in the first intent, the intent execution apparatus may receive the fourth intent modification request information from the BSS, where the fourth intent modification request information includes the third condition information. The intent execution apparatus sends the third condition information to the EMS. In this way, the second constraint is ensured in the process in which the intent execution apparatus performs the management operation on the network.

With reference to the fifth possible implementation and the sixth possible implementation of the sixteenth aspect, in a twelfth possible implementation, the receiving module is further configured to receive first intent modification request information from the BSS, where the first intent modification request information is used to request to modify the first condition information. The processing module is further configured to update the first process based on the first intent modification request information. According to the intent execution apparatus, when the BSS determines to modify the first condition information in the first intent, the intent execution apparatus may receive the first intent modification request information from the BSS, and update the first process based on the first intent modification request information. In this way, the intent execution apparatus executes the first intent according to the updated process.

With reference to the seventh possible implementation of the sixteenth aspect, in a thirteenth possible implementation, the intent execution apparatus further includes a sending module. The receiving module is further configured to receive fourth intent modification request information from the BSS, where the fourth intent modification request information includes fourth condition information, the fourth condition information is used to indicate a second prerequisite that the network meets before the intent execution apparatus performs the management operation on the network, and the second prerequisite is different from the first prerequisite. The sending module is configured to send the fourth condition information to the EMS. According to the intent execution apparatus, when the BSS determines to modify the first condition information in the first intent, the intent execution apparatus may receive the fourth intent modification request information from the BSS, where the fourth intent modification request information includes the fourth condition information. The intent execution apparatus sends the fourth condition information to the EMS. In this way, when the network meets the second prerequisite, the intent execution apparatus performs the management operation on the network.

According to a seventeenth aspect, an embodiment of this application provides an intent execution apparatus. The intent execution apparatus includes a processing module and a sending module. The processing module is configured to determine to execute a first intent, where the first intent is used to indicate an NMS to perform a management operation on a network, the first intent includes second condition information, and the second condition information is used to indicate a first constraint that the network meets in a process in which the NMS performs the management operation on the network. The sending module is configured to send the first intent to the NMS.

According to the intent execution apparatus provided in the seventeenth aspect, after determining to execute the first intent, the intent execution apparatus may send the first intent to the NMS. In this way, the NMS executes the first intent based on the second condition information.

With reference to the seventeenth aspect, in a first possible implementation, the first intent further includes first condition information, and the first condition information is used to indicate a first prerequisite that the network meets before the NMS performs the management operation on the network. According to the intent execution apparatus, the first intent sent by the intent execution apparatus to the NMS further includes the first condition information. In this way, the NMS executes the first intent based on the second condition information when the network meets the first prerequisite.

With reference to the seventeenth aspect, in a second possible implementation, the sending module is further configured to send fifth intent cancellation request information to the NMS, where the fifth intent cancellation request information is used to request to stop executing the first intent. According to the intent execution apparatus, when the intent execution apparatus determines to cancel the first intent, the intent execution apparatus may send the fifth intent cancellation request information to the NMS. In this way, the NMS cancels the first intent based on the fifth intent cancellation request information.

With reference to the seventeenth aspect, in a third possible implementation, the sending module is further configured to send second intent modification request information to the NMS, where the second intent modification request information includes third condition information, the third condition information is used to indicate a second constraint that the network meets in the process in which the NMS performs the management operation on the network, and the second constraint is different from the first constraint. According to the intent execution apparatus, when the intent execution apparatus determines to modify the second condition information in the first intent, the intent execution apparatus may send the second intent modification request information to the NMS. In this way, the NMS may modify the second condition information in the first intent based on the second intent modification request information.

With reference to the first possible implementation of the seventeenth aspect, in a fourth possible implementation, the sending module is further configured to send first intent modification request information to the NMS, where the first intent modification request information is used to request to modify the first condition information. According to the intent execution apparatus, when the intent execution apparatus determines to modify the first condition information in the first intent, the intent execution apparatus may send the first intent modification request information to the NMS. In this way, the NMS may modify the first condition information in the first intent based on the first intent modification request information.

With reference to the first possible implementation of the seventeenth aspect, in a fourth possible implementation, the sending module is further configured to send fourth intent modification request information to the NMS, where the fourth intent modification request information includes fourth condition information, the fourth condition information is used to indicate a second prerequisite that the network meets before the NMS performs the management operation on the network, and the second prerequisite is different from the first prerequisite. According to the intent execution apparatus, when the intent execution apparatus determines to modify the first condition information in the first intent, the intent execution apparatus may send the fourth intent modification request information to the NMS. In this way, the NMS may execute the first intent based on the fourth condition information.

According to an eighteenth aspect, an embodiment of this application provides an intent execution apparatus. The intent execution apparatus includes at least one processor, at least one memory, and a communication interface. The communication interface, the at least one memory, and the at least one processor are coupled. The intent execution apparatus communicates with another device by using the communication interface. The at least one memory is configured to store a computer program, so that when the computer program is executed by the at least one processor, the intent execution method according to the fourteenth aspect and the possible implementations of the fourteenth aspect is implemented.

According to a nineteenth aspect, an embodiment of this application provides an intent execution apparatus. The intent execution apparatus includes at least one processor, at least one memory, and a communication interface. The communication interface, the at least one memory, and the at least one processor are coupled. The intent execution apparatus communicates with another device by using the communication interface. The at least one memory is configured to store a computer program, so that when the computer program is executed by the at least one processor, the intent execution method according to the fifteenth aspect and the possible implementations of the fifteenth aspect is implemented.

According to a twentieth aspect, this application provides a system chip. The system chip may be used in an intent execution apparatus. The system chip includes at least one processor. Related program instructions are executed by the at least one processor, to implement a function of the NMS in the method according to any one of the fourteenth aspect and the designs of the fourteenth aspect. Optionally, the system chip may further include at least one memory, and the memory stores the related program instructions.

According to a twenty-first aspect, this application provides a system chip. The system chip may be used in an intent execution apparatus. The system chip includes at least one processor. Related program instructions are executed by the at least one processor, to implement a function of the BSS in the method according to any one of the fifteenth aspect and the designs of the fifteenth aspect. Optionally, the system chip may further include at least one memory, and the memory stores the related program instructions.

According to a twenty-second aspect, an embodiment of this application provides a computer-readable storage medium, for example, a non-transient computer-readable storage medium. The computer-readable storage medium stores a computer program. When the computer program is run on a computer, the computer is enabled to perform any possible method according to the fourteenth aspect. For example, the computer may be at least one storage node.

According to a twenty-third aspect, an embodiment of this application provides a computer-readable storage medium, for example, a non-transient computer-readable storage medium. The computer-readable storage medium stores a computer program. When the computer program is run on a computer, the computer is enabled to perform any possible method according to the fifteenth aspect. For example, the computer may be at least one storage node.

According to a twenty-fourth aspect, an embodiment of this application provides a computer program product. When the computer program product runs on a computer, any method provided in the fourteenth aspect is performed. For example, the computer may be at least one storage node.

According to a twenty-fifth aspect, an embodiment of this application provides a computer program product. When the computer program product runs on a computer, any method provided in the fifteenth aspect is performed. For example, the computer may be at least one storage node.

According to a twenty-sixth aspect, an embodiment of this application provides an intent execution system. The intent execution system may include any one or more of the following: the intent execution apparatus according to the sixteenth aspect, the intent execution apparatus according to the seventeenth aspect, the intent execution apparatus according to the eighteenth aspect, the intent execution apparatus according to the nineteenth aspect, the system chip according to the twentieth aspect, the system chip according to the twenty-first aspect, the computer-readable storage medium according to the twenty-second aspect, the computer-readable storage medium according to the twenty-third aspect, the computer program product according to the twenty-fourth aspect, or the computer program product according to the twenty-fifth aspect.

It may be understood that any one of the intent execution apparatus, the system chip, the computer-readable storage medium, the computer program product, the intent execution system, or the like provided above is configured to perform a corresponding method provided above. Therefore, for beneficial effects that can be achieved by the intent execution apparatus, the system chip, the computer-readable storage medium, the computer program product, the intent execution system, or the like, refer to beneficial effects in the corresponding method. Details are not described herein.

### BRIEF DESCRIPTION OF DRAWINGS

FIG. 1 is a schematic diagram of an intent hierarchical architecture according to an embodiment of this application;
FIG. 2 is a schematic diagram of a hardware structure of an apparatus according to an embodiment of this application;
FIG. 3 is a schematic flowchart 1 of an intent execution method according to an embodiment of this application;
FIG. 4 is a schematic flowchart 2 of an intent execution method according to an embodiment of this application;
FIG. 5 is a schematic flowchart 3 of an intent execution method according to an embodiment of this application;
FIG. 6 is a schematic flowchart 4 of an intent execution method according to an embodiment of this application;
FIG. 7 is a schematic flowchart 5 of an intent execution method according to an embodiment of this application;
FIG. 8 is a schematic flowchart 6 of an intent execution method according to an embodiment of this application;
FIG. 9 is a schematic flowchart 7 of an intent execution method according to an embodiment of this application;
FIG. 10 is a schematic flowchart 8 of an intent execution method according to an embodiment of this application;
FIG. 11 is a schematic flowchart 9 of an intent execution method according to an embodiment of this application;
FIG. 12 is a schematic diagram 1 of a structure of an intent execution apparatus according to an embodiment of this application;
FIG. 13 is a schematic diagram 2 of a structure of an intent execution apparatus according to an embodiment of this application;
FIG. 14 is a schematic diagram 3 of a structure of an intent execution apparatus according to an embodiment of this application;
FIG. 15 is a schematic diagram 4 of a structure of an intent execution apparatus according to an embodiment of this application;
FIG. 16 is a schematic diagram 5 of a structure of an intent execution apparatus according to an embodiment of this application;
FIG. 17 is a schematic diagram 6 of a structure of an intent execution apparatus according to an embodiment of this application; and
FIG. 18 is a schematic diagram of a structure of an intent execution system according to an embodiment of this application.

### DESCRIPTION OF EMBODIMENTS

The following describes implementations in embodiments of this application in detail with reference to the accompanying drawings.

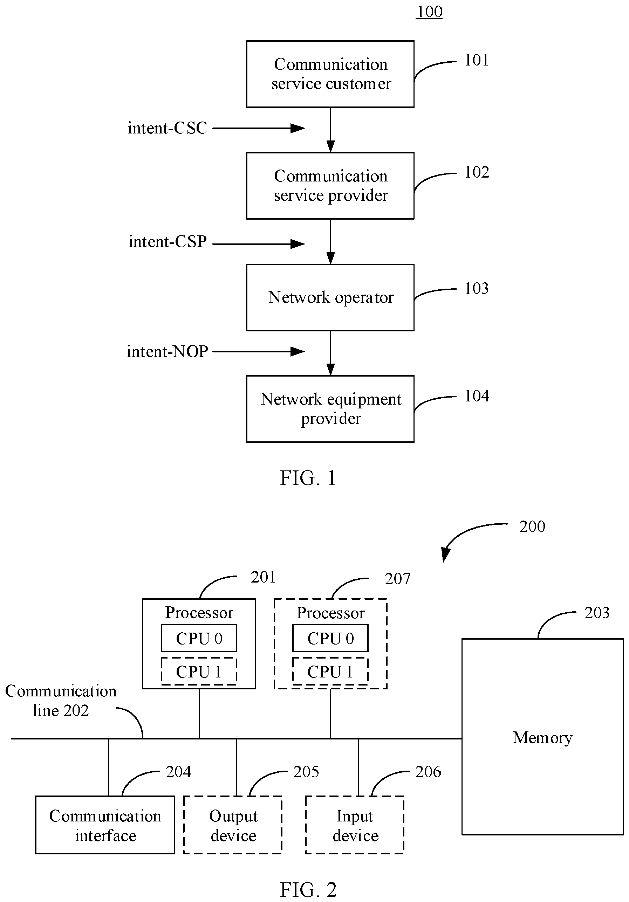

FIG. 1 is a schematic diagram of an intent hierarchical architecture according to an embodiment of this application. An intent execution method provided in embodiments of this application may be applied to the hierarchical architecture shown in FIG. 1.

In FIG. 1, a network management system 100 may include a communication service customer (communication service customer, CSC) 101, a CSP 102, a network operator (network operator, NOP) 103, and a network equipment provider (network equipment provider, NEP) 104.

The CSC 101 may be a user terminal. The CSP 102 may provide a communication service for the CSC 101, is responsible for operation of the communication service, including life cycle management of the communication service, and converts a corresponding communication service requirement into a network requirement. The NOP 103 may provide a network for the CSP 102, and is mainly responsible for life cycle management of the network. For example, the NOP 103 may provide a slice network and/or a non-slice network for the CSP 102. The NEP 104 may provide life cycle management of a subnet, life cycle management of a network element, and the like for the NOP 103.

In FIG. 1, the CSC 101 may propose an intent-CSC (intent-CSC), and send the intent-CSC to the CSP 102. The CSP 102 receives the intent-CSC, and may translate the intent-CSC into an intent-CSP. The CSP 102 may also propose an intent-CSP. The CSP 102 may send the intent-CSP obtained through translation and/or the proposed intent-CSP to the NOP 103. The NOP 103 receives the intent-CSP, and may translate the intent-CSP into an intent-NOP (intent-NOP). The NOP 103 may also propose an intent-NOP. The NOP 103 may send the intent-NOP obtained through translation and/or the proposed intent-NOP to the NEP 104. The NEP 104 receives the intent-NOP, and may translate the intent-NOP into a command corresponding to the intent-NOP. In addition, the NEP 104 delivers the command to a network element (network element, NE) (not shown in FIG. 1) corresponding to the command, and monitors a network status when the NE corresponding to the command executes the command, to ensure achievement of the intent.

The intent-CSC may express a service-level management requirement, and does not involve implementation details of a service and a network. The intent-CSP may express a network-level management requirement, and does not involve professional knowledge of the network operator. The intent-NOP may express a network resource-level management requirement, and does not involve operation details of a physical network device and/or a virtualized infrastructure.

It should be noted that, in the following embodiments of this application, the intent-CSP is used as an example to describe the intent execution method. For an intent-CSC execution method and an intent-NOP execution method, refer to a case in the intent-CSP execution method. Details are not described again.

In some embodiments, the CSP 102 may be a BSS/an OSS. The NOP 103 may be a network management system (network management system, NMS). The NEP 104 may be an element management system (element management system, EMS).

The BSS/OSS is a comprehensive management system oriented to an operator specific service. An operator may implement functions such as order management, charging, user management, and product management by using the BSS/OSS.

The NMS may be a management system responsible for network operation, management, and maintenance functions. The NMS may provide five basic functions: fault, configuration, accounting, performance, or security (fault, configuration, accounting, performance or security, or FCAPS). Managed objects of the NMS may include all entities in the network, for example, a network device, an application program, a server system, a router, a switch, a hub (HUB), and an auxiliary device (for example, an uninterruptible power system, UPS). The NMS may provide a network view of the entire system for a network administrator.

The EMS may be element management software conforming to an international telecommunication union telecommunication standardization sector (ITU telecommunication standardization sector, ITU-T) standard, and may manage one or more types of network elements.

Optionally, the EMS allows a user to independently manage all features of each network element.

In some embodiments, the EMS may perform operations such as intent translation, intent decomposition, and conflict detection. During actual application, the EMS may receive an intent (for example, the intent-NOP) of an upper-layer network element through an external interface, and feed back an intent achievement status to an intent sender. The EMS may further send sub-intents obtained through intent decomposition to a lower-layer network element.

Optionally, each device in FIG. 1 in embodiments of this application, for example, the CSC 101, the CSP 102, the NOP 103, or the NEP 104, may be a function module in an apparatus. It may be understood that the function module may be an element in a hardware device, a software function module running on hardware, or a virtualized function instantiated on a platform (for example, a cloud platform).

For example, each apparatus in FIG. 1 may be implemented by using an apparatus 200 in FIG. 2. FIG. 2 is a schematic diagram of a hardware structure of an apparatus applicable to an embodiment of this application. The apparatus 200 may include at least one processor 201, a communication line 202, a memory 203, and at least one communication interface 204.

The processor 201 may be a general-purpose central processing unit (central processing unit, CPU), a microprocessor, an application-specific integrated circuit (application-specific integrated circuit, ASIC), or one or more integrated circuits configured to control execution of programs in solutions in this application.

The communication line 202 may include a path for transferring information between the foregoing components, for example, a bus.

The communication interface 204 is configured to communicate with another device or a communication network by using any apparatus such as a transceiver. For example, the communication interface 204 is an ethernet interface, a radio access network (radio access network, RAN) interface, or a wireless local area network (wireless local area networks, WLAN) interface.

The memory 203 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor through the communication line 202. Alternatively, the memory may be integrated with the processor. The memory provided in this embodiment of this application may usually be non-volatile. The memory 203 is configured to store computer-executable instructions for executing the solutions in this application, and execution is controlled by the processor 201. The processor 201 is configured to execute the computer-executable instructions stored in the memory 203, to implement the method provided in embodiments of this application.

Optionally, the computer-executable instructions in this embodiment of this application may also be referred to as application program code. This is not specifically limited in this embodiment of this application.

During specific implementation, in an embodiment, the processor 201 may include one or more CPUs, for example, a CPU 0 and a CPU 1 in FIG. 2.

During specific implementation, in an embodiment, the apparatus 200 may include a plurality of processors, for example, the processor 201 and a processor 207 in FIG. 2. Each of the processors may be a single-core (single-CPU) processor, or may be a multi-core (multi-CPU) processor. The processor herein may refer to one or more devices, circuits, and/or processing cores configured to process data (for example, computer program instructions).

During specific implementation, in an embodiment, the apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive a user input in a plurality of manners. For example, the input device 206 may be a mouse, a keyboard, a touchscreen device, or a sensing device.

With reference to FIG. 1 and FIG. 2, the following describes in detail the intent execution method provided in embodiments of this application by using the intent-CSP is used as an example. It should be noted that the BSS in the following embodiments may also be replaced with an OSS.

An apparatus, for example, a BSS or an NMS, in the following embodiments may include components shown in FIG. 2.

It may be understood that, in embodiments of this application, the BSS or the NMS may perform some or all of steps in embodiments of this application. The steps are merely examples. In embodiments of this application, other steps or variations of various steps may further be performed. In addition, the steps may be performed in a sequence different from a sequence presented in embodiments of this application, and not all steps in embodiments of this application need to be performed.

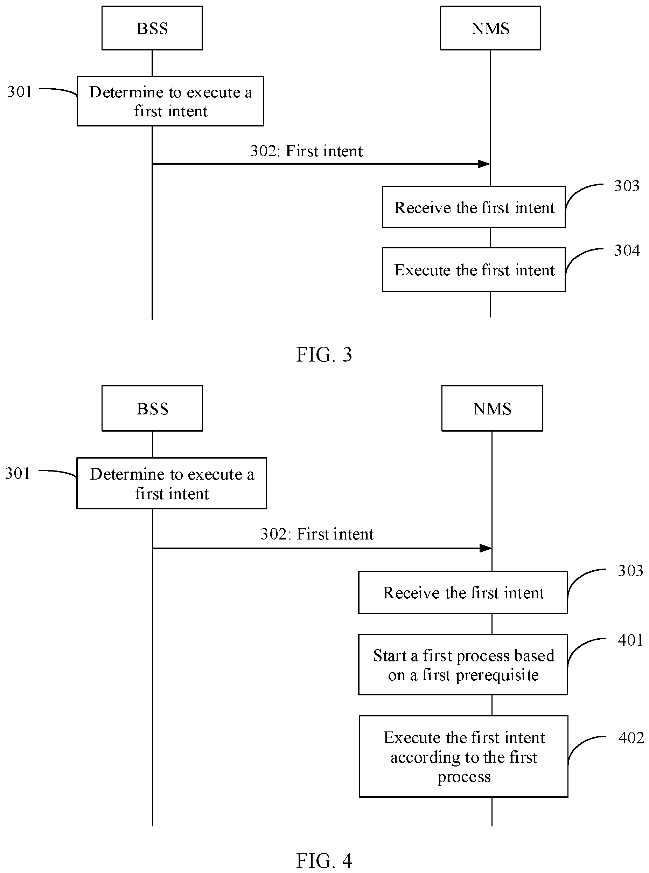

FIG. 3 shows an intent execution method according to an embodiment of this application. The intent execution method includes step 301 to step 304.

Step 301: A BSS determines to execute a first intent.

The first intent may be used to indicate an NMS to perform a management operation on a network. The first intent may be an intent-CSP.

The first intent may include first intent driven action (IntentDrivenAction) information and first intent driven object (IntentDrivenObject) information.

The first intent driven action information may include a first intent driven action name (IntentDrivenActionName) and a first intent driven action property (IntentDrivenActionProperties). The first intent driven action property may include one or more properties required for completing the first intent driven action.

The first intent driven object information may include a first intent driven object name (IntentDrivenObjectName) and a first intent driven object property (IntentDrivenObjectProperties). The first intent driven object property may be used to identify a property of an object instance.

For example, a formal expression of the first intent may be shown as follows:

```
          <intentExpression> := <IntentDrivenAction><IntentDrivenObject>
          <IntentDrivenAction> := <IntentDrivenActionName><IntentDrivenActionProperties>
          <IntentDrivenObject> := <IntentDrivenObjectName><IntentDrivenObjectProperties>
```

For example, the first intent is: In an area 1 of Pudong District, Shanghai, a percentage of users whose data rate is less than 5 Mbps is less than 1%, and an average rate is not less than 7 Mbps. A formal expression of the first intent may be shown in Table 1. A first intent driven action name is optimization, and the first intent driven action property includes an optimization type, a maximum percentage of user equipment having a low data rate, a low data rate threshold, and a minimum average data rate. The optimization type is a data rate, the maximum percentage of user equipment having a low data rate is 1%, the low data rate threshold is 5 Mbps, and the minimum average data rate is 7 Mbps. An intent driven object name of the first intent is Pudong, Shanghai, and an intent driven object property of the first intent is the area 1.

**Table 1**

| Intent driven action | | Intent driven object | |
|---|---|---|---|
| Intent driven action name | Intent driven action property | Intent driven object name | Intent driven object property |
| Optimization | Data rate [1%, 5 Mbps] 7 Mbps | Pudong, Shanghai | Area 1 |

Optionally, the first intent further includes first condition information and/or second condition information.

The first condition information may be used to indicate a first prerequisite that the network meets before the NMS performs the management operation on the network; or the first condition information may be used to indicate a first prerequisite that the network meets when the NMS performs the management operation on the network. For example, the first condition information may be used to indicate the NMS to execute the first intent when edge downlink reference signal received power (reference signal receiving power, RSRP) of a station is less than-110 dBm. For another example, the first condition information may be used to indicate start time and end time for executing the first intent.

The second condition information may be used to indicate a first constraint that the network meets in a process in which the NMS performs the management operation on the network. For example, the second condition information may be used to indicate that a physical resource block (physical resource block, PRB) utilization rate is not affected in a process in which a downlink user rate in the area 1 is increased to 1 Gbps.

In a possible implementation, condition (condition) field information of the first intent includes the first condition information and/or the second condition information. For example, the first intent includes the first intent driven action information, the first intent driven object information, and the condition field information of the first intent, and a condition field of the first intent includes the first condition information and/or the second condition information. For descriptions of the first intent driven action information and the first intent driven object information, refer to descriptions of the first intent. Details are not described again.

For example, the first intent is: When edge downlink RSRP of a station in an area 1 of Pudong District, Shanghai is less than -110 dBm, and a PRB utilization rate is not affected, in the area 1, a percentage of users whose data rate is less than 5 Mbps is less than 1%, and an average rate is not less than 7 Mbps. A formal expression of the first intent may be shown in Table 2. An first intent driven action name is optimization, and the first intent driven action property includes an optimization type, a maximum percentage of user equipment having a low data rate, a low data rate threshold, and a minimum average data rate. The optimization type is a data rate, the maximum percentage of user equipment having a low data rate is 1%, the low data rate threshold is 5 Mbps, and the minimum average data rate is 7 Mbps. The first intent driven object name is Pudong, Shanghai, the first intent driven object property is the area 1, and the condition field information includes that the RSRP is less than -110 dBm and that the PRB utilization rate remains unchanged.

**Table 2**

| Intent driven action information | | Intent driven object information | | Condition field information |
|---|---|---|---|---|
| Intent driven action name | Intent driven action property | Intent driven object name | Intent driven object property | The RSRP is less than -110 dBm, and the PRB utilization rate remains unchanged |
| Optimization | Data rate [1%, 5 Mbps] 7 Mbps | Pudong, Shanghai | Area 1 | |

In another possible implementation, a condition field in the first intent driven action property includes the first condition information and/or the second condition information. For example, the first intent includes the first intent driven action information and the first intent driven object information, the first intent driven action information includes the first intent driven action name and the first intent driven action property, the first intent driven action property may include condition field information and one or more properties required for completing the first intent driven action, and the condition field information includes the first condition information and/or the second condition information.

For example, the first intent is: When edge downlink RSRP of a station in an area 1 of Pudong District, Shanghai is less than -110 dBm, and a PRB utilization rate is not affected, in the area 1, a percentage of users whose data rate is less than 5 Mbps is less than 1%, and an average rate is not less than 7 Mbps. A formal expression of the first intent may be shown in Table 3. A first intent driven action name is optimization, and the first intent driven action property includes an optimization type, a maximum percentage of user equipment having a low data rate, a low data rate threshold, a minimum average data rate, and the condition field information. The optimization type is a data rate, the maximum percentage of user equipment having a low data rate is 1%, the low data rate threshold is 5 Mbps, the minimum average data rate is 7 Mbps, and the condition field information includes that the RSRP is less than -110 dBm and that the PRB utilization rate remains unchanged. The first intent driven object name is Pudong, Shanghai, and the first intent driven object property is the area 1.

**Table 3**

| Intent driven action information | | Intent driven object information | |
|---|---|---|---|
| Intent driven action name | Intent driven action property | Intent driven object name | Intent driven object property |
| Optimization | Data rate [1%, 5 Mbps] 7 Mbps Condition field information | Pudong, Shanghai | Area 1 |

In still another possible implementation, the first intent driven action property includes the first condition information and/or the second condition information. For example, the first intent includes the first intent driven action information and the first intent driven object information, the first intent driven action information includes the first intent driven action name and the first intent driven action property, the first intent driven action property may include one or more properties required for completing the first intent driven action, the first condition information, and/or the second condition information.

For example, the first intent is: When edge downlink RSRP of a station in an area 1 of Pudong District, Shanghai is less than -110 dBm, and a PRB utilization rate is not affected, in the area 1, a percentage of users whose data rate is less than 5 Mbps is less than 1%, and an average rate is not less than 7 Mbps. A formal expression of the first intent may be shown in Table 4. A first intent driven action name is optimization, and the first intent driven action property includes an optimization type, a maximum percentage of user equipment having a low data rate, a low data rate threshold, a minimum average data rate, the first condition information, and/or the second condition information. The optimization type is a data rate, the maximum percentage of user equipment having a low data rate is 1%, the low data rate threshold is 5 Mbps, the minimum average data rate is 7 Mbps, and the first condition information includes that the RSRP is less than -110 dBm and that the PRB utilization rate remains unchanged. The first intent driven object name is Pudong, Shanghai, and the first intent driven object property is the area 1.

**Table 4**

| Intent driven action information | | Intent driven object information | |
|---|---|---|---|
| Intent driven action name | Intent driven action property | Intent driven object name | Intent driven object property |
| Optimization | Data rate | Pudong, Shanghai | Area 1 |
| | [1%, 5 Mbps] | | |
| | 7 Mbps | | |
| | The RSRP is less than -110 dBm, and the PRB utilization rate remains unchanged | | |

Step 302: The BSS sends the first intent to the NMS.

Optionally, that the BSS sends the first intent to the NMS includes: The BSS sends first request information to the NMS, where the first request information includes the first intent.

In some embodiments, the first request information may be used to request to create the first intent (createintent).

In some embodiments, the first request information may be used to request to implement the first intent (implementintent).

Step 303: The NMS receives the first intent from the BSS.

Optionally, that NMS receives the first intent from the BSS includes: The NMS receives the first request information from the BSS.

In some embodiments, if the first request information is used to request to create the first intent, the NMS receives the first request information, to create the first intent and set a status of the first intent to an inactive state, and sends first response information to the BSS. The first response information is used to indicate a creation result of the first intent (for example, the first intent is successfully created or the first intent fails to be created), and may include an identifier of the first intent. Subsequently, if the first intent needs to be executed, the NMS may further receive activation request information sent by the BSS, where the activation request information is used to request to activate the first intent. After receiving the activation request information, the NMS may convert the status of the first intent from the inactive state to an active state.

The inactive state of the first intent may be used to indicate that the first intent is stored in the NMS as a management object (for example, a record in a database), but is not translated and executed. The active state of the first intent may be used to indicate that the first intent has been translated or executed, and network monitoring, automatic policy adjustment, and the like that are performed by the NMS to ensure achievement of the first intent are also being performed.

In some embodiments, if the first request information is used to request to implement the first intent, the NMS receives the first request information, to translate the first intent into an execution policy corresponding to the first intent, and sends first response information to the BSS. The first response information is used to indicate an implementation result of the first intent (for example, the first intent is successfully implemented or the first intent fails to be implemented), and may include an identifier of the first intent.

Optionally, after receiving the first intent from the BSS, the NMS sends message reception acknowledgment information to the BSS, where the message reception acknowledgment information is used to indicate that the NMS has received the first intent.

Step 304: The NMS executes the first intent.

It should be noted that the NMS may execute the first intent depending on whether the first intent includes the first condition information and/or the second condition information. A case in which the first intent includes the first condition information, a case in which the first intent includes the second condition information, and a case in which the first intent includes the first condition information and the second condition information indicate different processes in which the NMS executes the first intent.

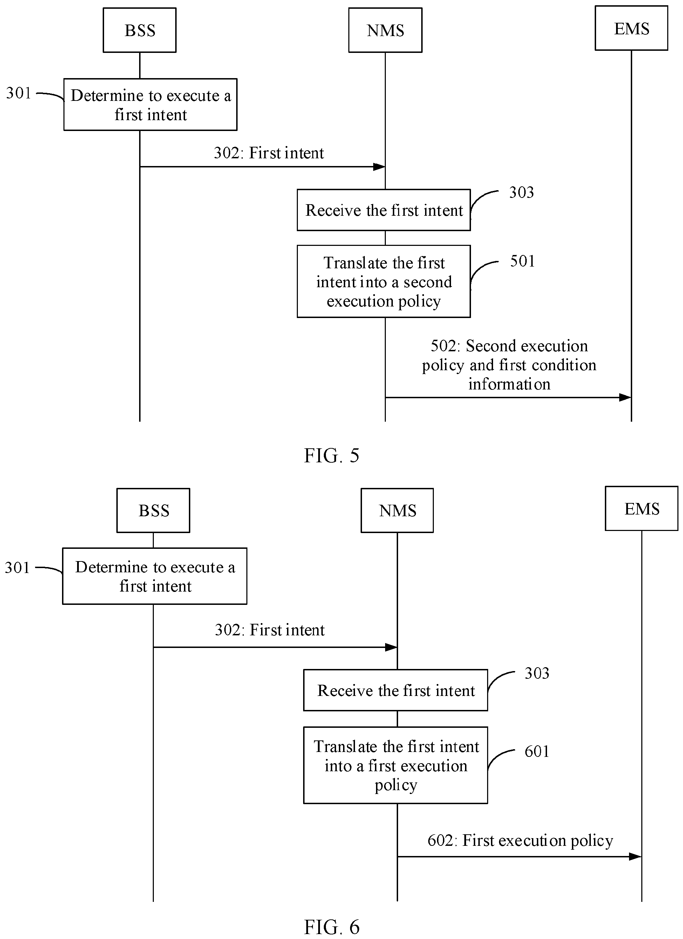

In some embodiments, when the first intent includes the first condition information, the NMS may execute the first intent based on the first prerequisite. For specific descriptions of executing the first intent by the NMS based on the first prerequisite, refer to the following descriptions in a method shown in FIG. 4 and a method shown in FIG. 5.

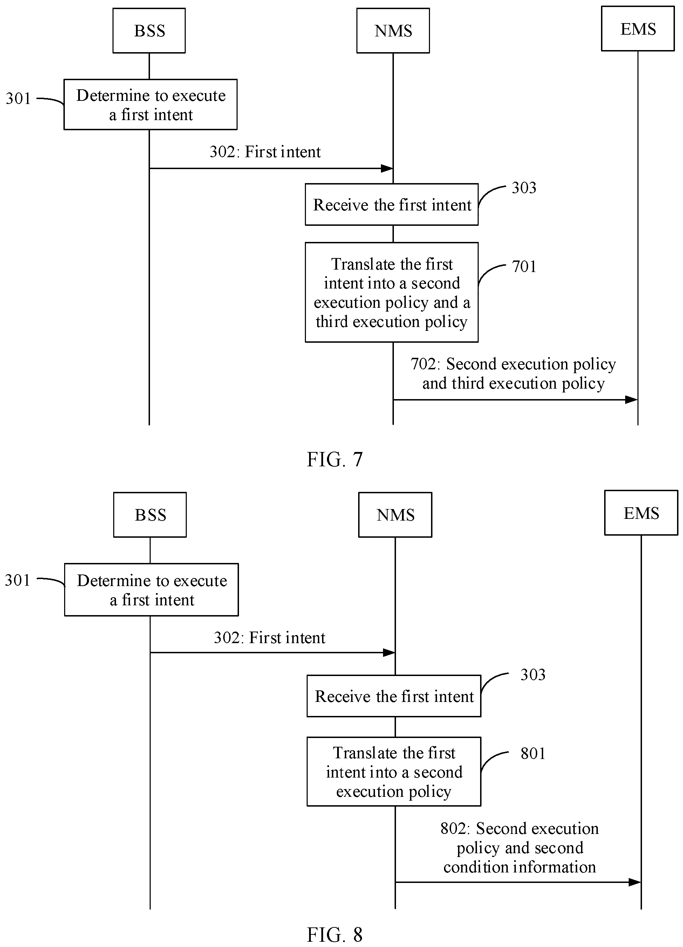

In some embodiments, when the first intent includes the second condition information, the NMS may execute the first intent based on the first constraint. For specific descriptions of executing the first intent by the NMS based on the first constraint, refer to the following descriptions in a method shown in FIG. 6, a method shown in FIG. 7, and a method shown in FIG. 8.

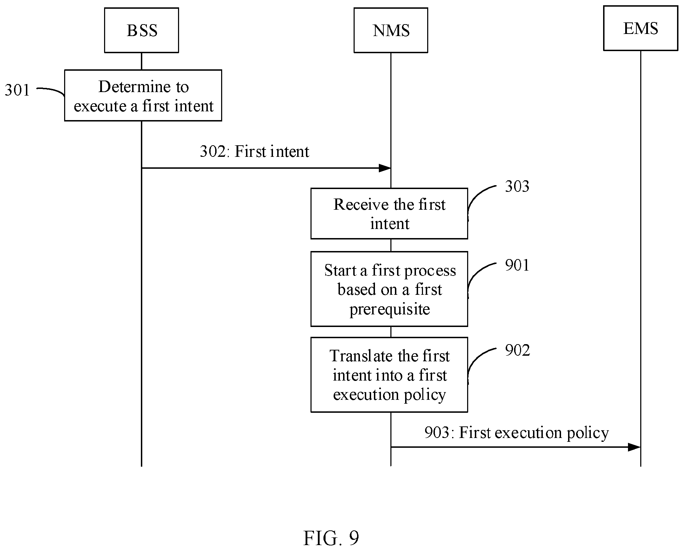

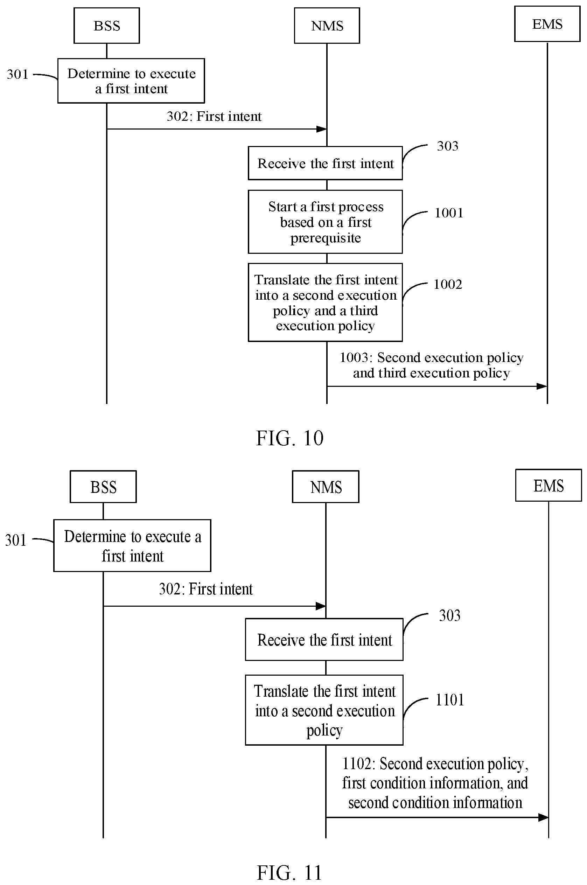

In some embodiments, when the first intent includes the first condition information and the second condition information, the NMS may execute the first intent based on the first prerequisite and the first constraint. For specific descriptions of executing the first intent by the NMS based on the first prerequisite and the first constraint, refer to the following descriptions in a method shown in FIG. 9, a method shown in FIG. 10, and a method shown in FIG. 11.

It should be noted that, after executing the first intent, the NMS may maintain the first intent. When the network does not meet the first prerequisite, the NMS stops maintaining the first intent. Subsequently, if the network meets the first prerequisite, the NMS may re-execute and maintain the first intent.

Optionally, after step 304, the NMS sends a notification message to the BSS, where the notification message is used to indicate an execution result of the first intent. For example, the notification message is used to indicate that the first intent is successfully executed or that the first intent fails to be executed.

Based on the method shown in FIG. 3, the NMS may receive the first intent from the BSS, where the first intent includes the first condition information and/or the second condition information, and may execute the first intent based on the first prerequisite and/or the first constraint. In this process, participation of an administrator is not required. This simplifies an intent execution process.

Further, optionally, in a first implementation scenario of the method shown in FIG. 3, when the first intent includes the first condition information, that the NMS executes the first intent includes: The NMS starts a first process based on the first prerequisite, and executes the first intent according to the first process. As shown in FIG. 4, in the method shown in FIG. 3, step 304 includes step 401 and step 402.

Step 401: The NMS starts the first process based on the first prerequisite.

The first process may be used to monitor whether the network meets the first prerequisite. The first process may be a background process.

Example 1: The first condition information indicates that the start time of the first intent is a moment A. The NMS may start a timer, and set stop time of the timer to the moment A.

Example 2: The first condition information indicates that the NMS executes the first intent when edge downlink RSRP of a station is less than -110 dBm. The NMS may start a process of measuring the downlink RSRP. In the process of measuring the downlink RSRP, the downlink RSRP may be measured at a preset time interval.

Step 402: The NMS executes the first intent according to the first process.

Optionally, when it is found in the first process that the network meets the first prerequisite, the NMS executes the first intent; or when it is found in the first process that the network does not meet the first prerequisite, the NMS does not execute the first intent.

For the foregoing Example 1, when the timer stops, the NMS executes the first intent; or when the timer does not stop, the NMS does not execute the first intent.

For the foregoing Example 2, when the measured downlink RSRP is less than -110 dBm, the NMS executes the first intent; or when the measured downlink RSRP is greater than or equal to -110 dBm, the NMS does not execute the first intent.

Optionally, after receiving the first intent, the NMS may further translate the first intent into a second execution policy. That the NMS executes the first intent according to the first process includes: The NMS executes the second execution policy according to the first process.

The second execution policy may be used to enable the NMS to perform the management operation on the network. The second execution policy may include a second intent or a first command corresponding to the first intent. The second intent may be an intent-NOP. The first command may be a command corresponding to the management operation performed by the NMS on the network. If the second execution policy includes the second intent, that the NMS executes the second execution policy according to the first process includes: The NMS sends the second intent to an EMS according to the first process. After receiving the second intent, the EMS may translate the second intent into a second command corresponding to the second intent, and send the second command to a network element corresponding to the second intent for execution. If the second execution policy includes the first command, that the NMS executes the second execution policy according to the first process includes: The NMS sends the first command to an EMS according to the first process. After receiving the first command, the EMS may send the first command to a network element corresponding to the first intent for execution.

In some embodiments, the BSS may cancel the first intent, and/or may modify the first condition information in the first intent.

Optionally, if the BSS cancels the first intent, the BSS sends first intent cancellation request information to the NMS. The NMS receives the first intent cancellation request information from the BSS, stops the first process based on the first intent cancellation request information, generates an intent execution stop policy based on the first intent cancellation request information, and sends the intent execution stop policy to the EMS. The EMS receives the intent execution stop policy from the NMS, and stops, according to the intent execution stop policy, executing the second execution policy.

Canceling the first intent may also be described as deactivating the first intent. The first intent cancellation request information may be used to indicate to stop the first intent. The first intent cancellation request information may include the identifier of the first intent. The intent execution stop policy may be used to indicate to stop the execution policy corresponding to the first intent.

Optionally, after canceling the first intent, the BSS may further delete the first intent. For example, after canceling the first intent, the BSS sends intent deletion request information to the NMS. The NMS receives the intent deletion request information from the BSS, and deletes the first intent based on the intent deletion request information.

The intent deletion request information may include the identifier of the first intent.

Optionally, if the BSS modifies the first condition information in the first intent, the BSS sends first intent modification request information to the NMS. The NMS receives the first intent modification request information from the BSS, and updates the first process based on the first intent modification request information.

The first intent modification request information may be used to request to modify the first condition information. The first intent modification request information may include the identifier of the first intent and fifth condition information. The fifth condition information may be used to indicate condition information obtained by modifying the first condition information.

For example, the first condition information indicates that the start time of the first intent is the moment A, and the fifth condition information indicates that the start time of the first intent is a moment B. After receiving the first intent modification request information, the NMS updates the stop time of the timer from the moment A to the moment B.

For example, when the first condition information indicates that edge downlink RSRP of a station is less than -110 dBm, the NMS executes the first intent, and the fifth condition information indicates that the downlink RSRP in the first condition information is modified from being less than -110 dBm to being less than -120 dBm. After receiving the first intent modification request information, the NMS updates -110 dBm in a downlink RSRP process to -120 dBm. In the process of measuring the downlink RSRP, the downlink RSRP may be measured at a preset time interval. When the measured downlink RSRP is less than-120 dBm, the NMS executes the first intent; or when the measured downlink RSRP is greater than or equal to -120 dBm, the NMS does not execute the first intent.

Based on the first implementation scenario of the method shown in FIG. 3, when the first intent includes the first condition information, after receiving the first intent from the BSS, the NMS may start the first process based on the first prerequisite, and execute the first intent according to the first process. In this process, participation of the administrator is not required. This simplifies the intent execution process.

Further, optionally, in a second implementation scenario of the method shown in FIG. 3, when the first intent includes the first condition information, that the NMS executes the first intent includes: The NMS may translate the first intent into a second execution policy, and send the second execution policy and the first condition information to an EMS. As shown in FIG. 5, in the method shown in FIG. 3, step 304 includes step 501 and step 502.

Step 501: The NMS translates the first intent into the second execution policy.

The second execution policy may be used to enable the NMS to perform the management operation on the network. The second execution policy may include a second intent or a first command corresponding to the first intent. The second intent may be an intent-NOP. The first command may be a command corresponding to the management operation performed by the NMS on the network.

Step 502: The NMS sends the second execution policy and the first condition information to the EMS.

Optionally, if the second execution policy includes the second intent, the NMS sends the second intent and the first condition information to the EMS. After receiving the second intent and the first condition information, the EMS may translate the second intent into a second command corresponding to the second intent, and start a second process based on the first condition information, where the second process may be used to monitor whether the network meets the first prerequisite. If it is found in the second process that the network meets the first prerequisite, the EMS sends the second command to a network element corresponding to the second intent for execution.

Optionally, if the second execution policy includes the first command, the NMS sends the first command and the first condition information to the EMS. After receiving the first command and the first condition information, the EMS may start a second process based on the first condition information. When it is found in the second process that the network meets the first prerequisite, the EMS sends the first command to a network element corresponding to the first intent for execution.

It should be noted that, if the EMS cannot understand the first condition information, for example, cannot identify the first condition information, the NMS may further convert the first condition information into information that can be understood by a lower-layer system, and then send, to the EMS, the information that can be understood by the lower-layer system.

In some embodiments, the BSS may cancel the first intent, and/or may modify the first condition information in the first intent.

Optionally, if the BSS cancels the first intent, the BSS sends third intent cancellation request information to the NMS. The NMS receives the third intent cancellation request information from the BSS, generates an intent execution stop policy based on the third intent cancellation request information, and sends the intent execution stop policy to the EMS. The EMS receives the intent execution stop policy from the NMS, and stops the second process and the second execution policy according to the intent execution stop policy.

Canceling the first intent may also be described as deactivating the first intent. The third intent cancellation request information may be used to indicate to stop the first intent. The third intent cancellation request information may include the identifier of the first intent. The intent execution stop policy may be used to indicate to stop the second process and the second execution policy.

Optionally, after canceling the first intent, the BSS may further delete the first intent. For example, after canceling the first intent, the BSS sends intent deletion request information to the NMS. The NMS receives the intent deletion request information from the BSS, and deletes the second intent based on the intent deletion request information.

The intent deletion request information may include the identifier of the first intent.

Optionally, if the BSS modifies the first condition information in the first intent, the BSS sends fourth intent modification request information to the NMS. The NMS receives the fourth intent modification request information from the BSS, and sends the fourth intent modification request information to the EMS. The EMS receives the fourth intent modification request information from the NMS, and updates the second process based on the fourth intent modification request information.

The fourth intent modification request information may be used to request to modify the first condition information. The fourth intent modification request information may include the identifier of the first intent and fourth condition information. The fourth condition information may be used to indicate a second prerequisite that the network meets before the NMS performs the management operation on the network. The second prerequisite is different from the first prerequisite.

Based on the second implementation scenario of the method shown in FIG. 3, when the first intent includes the first condition information, after receiving the first intent from the BSS, the NMS may translate the first intent into the second execution policy, and send the second execution policy and the first condition information to the EMS. In this way, the EMS can start the second process based on the first condition information, and execute the second execution policy according to the second process.

Further, optionally, in a third implementation scenario of the method shown in FIG. 3, when the first intent includes the second condition information, that the NMS executes the first intent includes: The NMS translates the first intent into a first execution policy, and sends the first execution policy to an EMS. As shown in FIG. 6, in the method shown in FIG. 3, step 304 includes step 601 and step 602.

Step 601: The NMS translates the first intent into the first execution policy.

The first execution policy may be used to: enable the NMS to perform the management operation on the network, and ensure the first constraint in the process in which the NMS performs the management operation on the network.

For example, the second condition information indicates that the PRB utilization rate is not affected in the process in which the downlink user rate in the area 1 is increased to 1 Gbps. The first execution policy may ensure that the PRB utilization rate remains unchanged in the process in which the downlink user rate in the area 1 is increased to 1 Gbps.

Optionally, the first execution policy includes a third intent and a third command corresponding to the first intent. The third intent may be an intent-NOP. The third command may be a command corresponding to the management operation performed by the NMS on the network. The third intent and the third command may ensure the first constraint.

Step 602: The NMS sends the first execution policy to the EMS.

Optionally, if the first execution policy includes the third intent, the NMS sends the third intent to the EMS. After receiving the third intent, the EMS may translate the third intent into a fourth command corresponding to the third intent, and send the fourth command to a network element corresponding to the third intent for execution.

Optionally, if the first execution policy includes the third command, the NMS sends the third command to the EMS. After receiving the third command, the EMS may send the third command to a network element corresponding to the first intent for execution.

In some embodiments, the BSS may cancel the first intent, and/or may modify the second condition information in the first intent.

Optionally, if the BSS cancels the first intent, the BSS sends fourth intent cancellation request information to the NMS. The NMS receives the fourth intent cancellation request information from the BSS, generates an intent execution stop policy based on the fourth intent cancellation request information, and sends the intent execution stop policy to the EMS. The EMS receives the intent execution stop policy from the NMS, and stops the first execution policy according to the intent execution stop policy.

Canceling the first intent may also be described as deactivating the first intent. The fourth intent cancellation request information may be used to indicate to stop the first intent. The fourth intent cancellation request information may include the identifier of the first intent. The intent execution stop policy may be used to indicate to stop the first execution policy.

Optionally, after canceling the first intent, the BSS may further delete the first intent. For example, after canceling the first intent, the BSS sends intent deletion request information to the NMS. The NMS receives the intent deletion request information from the BSS, and deletes the first intent based on the intent deletion request information.

The intent deletion request information may include the identifier of the first intent.

Optionally, if the BSS modifies the second condition information in the first intent, the BSS sends second intent modification request information to the NMS. The NMS receives the second intent modification request information from the BSS, obtains a fourth execution policy through translation based on the second intent modification request information, and sends the fourth execution policy to the EMS.

The second intent modification request information may be used to request to modify the second condition information. The second intent modification request information may include the identifier of the first intent and third condition information. The third condition information may be used to indicate a second constraint that the network meets in the process in which the NMS performs the management operation on the network. The second constraint is different from the first constraint.

The fourth execution policy may be used to: enable the NMS to perform the management operation on the network, and ensure the second constraint in the process in which the NMS performs the management operation on the network. The fourth execution policy may include a fourth intent or a fifth command corresponding to the first intent. The fourth intent may be an intent-NOP. The fifth command may be a command corresponding to the management operation performed by the NMS on the network. The fourth intent and the fifth command may ensure the second constraint.

Optionally, if the fourth execution policy includes the fourth intent, the NMS sends the fourth intent to the EMS. After receiving the fourth intent, the EMS may translate the fourth intent into a sixth command corresponding to the fourth intent, and send the sixth command to a network element corresponding to the fourth intent for execution.

Optionally, if the fourth execution policy includes the fifth command, the NMS sends the fifth command to the EMS. After receiving the fifth command, the EMS may send the fifth command to a network element corresponding to the first intent for execution.

Based on the third implementation scenario of the method shown in FIG. 3, when the first intent includes the second condition information, after receiving the first intent from the BSS, the NMS may translate the first intent into the first execution policy, and send the first execution policy to the EMS. In this way, the first constraint can be ensured when the EMS executes the first execution policy.

Further, optionally, in a fourth implementation scenario of the method shown in FIG. 3, when the first intent includes the second condition information, that the NMS executes the first intent includes: The NMS translates the first intent into a second execution policy and a third execution policy, and sends the second execution policy and the third execution policy to an EMS. As shown in FIG. 7, in the method shown in FIG. 3, step 304 includes step 701 and step 702.

Step 701: The NMS translates the first intent into the second execution policy and the third execution policy.

The second execution policy may be used to enable the NMS to perform the management operation on the network. The second execution policy may include a second intent or a first command corresponding to the first intent. The second intent may be an intent-NOP. The first command may be a command corresponding to the management operation performed by the NMS on the network.

The third execution policy may be used to ensure the first constraint in the process in which the NMS performs the management operation on the network.

For example, the second condition information indicates that the PRB utilization rate is not affected in the process in which the downlink user rate in the area 1 is increased to 1 Gbps. The second execution policy may increase the downlink user rate in the area 1 to 1 Gbps, and the third execution policy may ensure that the PRB utilization rate remains unchanged in the process in which the downlink user rate in the area 1 is increased to 1 Gbps.

Step 702: The NMS sends the second execution policy and the third execution policy to the EMS.

Optionally, if the second execution policy includes the second intent, the NMS sends the second intent and the third execution policy to the EMS. After receiving the second intent and the third execution policy, the EMS may translate the second intent into a second command corresponding to the second intent, and send the second command and the third execution policy to a network element corresponding to the second intent for execution.

Optionally, if the second execution policy includes the first command, the NMS sends the first command and the third execution policy to the EMS. After receiving the first command and the third execution policy, the EMS may send the first command and the third execution policy to a network element corresponding to the first intent for execution.

In some embodiments, the BSS may cancel the first intent, and/or may modify the second condition information in the first intent.

Optionally, if the BSS cancels the first intent, the BSS sends fifth intent cancellation request information to the NMS. The NMS receives the fifth intent cancellation request information from the BSS, generates an intent execution stop policy and an execution stop policy of the first constraint based on the fifth intent cancellation request information, and sends the intent execution stop policy and the execution stop policy of the first constraint to the EMS. The EMS receives the intent execution stop policy and the execution stop policy of the first constraint from the NMS, stops the second execution policy according to the intent execution stop policy, and stops the third execution policy according to the execution stop policy of the first constraint.

Canceling the first intent may also be described as deactivating the first intent. The fifth intent cancellation request information may be used to indicate to stop the first intent. The fifth intent cancellation request information may include the identifier of the first intent. The intent execution stop policy may be used to indicate to stop the second execution policy. The execution stop policy of the first constraint may be used to indicate to stop the third execution policy.

Optionally, after canceling the first intent, the BSS may further delete the first intent. For example, after canceling the first intent, the BSS sends intent deletion request information to the NMS. The NMS receives the intent deletion request information from the BSS, and deletes the first intent based on the intent deletion request information.

The intent deletion request information may include the identifier of the first intent.

Optionally, if the BSS modifies the second condition information in the first intent, the BSS sends third intent modification request information to the NMS. The NMS receives the third intent modification request information from the BSS, obtains a fifth execution policy through translation based on the third intent modification request information, and sends the fifth execution policy to the EMS. The EMS receives the fifth execution policy from the NMS, and a second constraint is ensured in a process in which the EMS executes the second execution policy according to the fifth execution policy.

The third intent modification request information may be used to request to modify the second condition information. The third intent modification request information may include the identifier of the first intent and third condition information. The third condition information may be used to indicate the second constraint that the network meets in the process in which the NMS performs the management operation on the network. The second constraint is different from the first constraint.

The fifth execution policy may be used to ensure the second constraint in the process in which the NMS performs the management operation on the network.

Based on the fourth implementation scenario of the method shown in FIG. 3, when the first intent includes the second condition information, after receiving the first intent from the BSS, the NMS translates the first intent into the second execution policy and the third execution policy, and sends the second execution policy and the third execution policy to the EMS. In this way, the second constraint is ensured in the process in which the EMS executes the second execution policy.

Further, optionally, in a fifth implementation scenario of the method shown in FIG. 3, when the first intent includes the second condition information, that the NMS executes the first intent includes: The NMS translates the first intent into a second execution policy, and sends the second execution policy and the second condition information to an EMS. As shown in FIG. 8, in the method shown in FIG. 3, step 304 includes step 801 and step 802.

Step 801: The NMS translates the first intent into the second execution policy.

The second execution policy may be used to enable the NMS to perform the management operation on the network. The second execution policy may include a second intent or a first command corresponding to the first intent. The second intent may be an intent-NOP. The first command may be a command corresponding to the management operation performed by the NMS on the network.

Step 802: The NMS sends the second execution policy and the second condition information to the EMS.

Optionally, if the second execution policy includes the second intent, the NMS sends the second intent and the second condition information to the EMS. After receiving the second intent and the second condition information, the EMS may translate the second intent into a second command corresponding to the second intent, and translate the second condition information into a sixth execution policy, where the sixth execution policy is used to indicate to ensure the first constraint in a process in which the EMS executes the second execution policy. The EMS sends the second command and the sixth execution policy to a network element corresponding to the second intent.

Optionally, if the second execution policy includes the first command, the NMS sends the first command and the second condition information to the EMS. After receiving the first command and the second condition information, the EMS may translate the second condition information into a sixth execution policy, and sends the first command and the sixth execution policy to a network element corresponding to the first intent.

It should be noted that, if the EMS cannot understand the second condition information, for example, cannot identify the second condition information, the NMS may further convert the second condition information into information that can be understood by a lower-layer system, and then send, to the EMS, the information that can be understood by the lower-layer system.

In some embodiments, the BSS may cancel the first intent, and/or may modify the first condition information in the first intent.

Optionally, if the BSS cancels the first intent, the BSS sends sixth intent cancellation request information to the NMS. The NMS receives the sixth intent cancellation request information from the BSS, generates an intent execution stop policy based on the sixth intent cancellation request information, and sends the intent execution stop policy to the EMS. The EMS receives the intent execution stop policy from the NMS, and stops the second execution policy and the sixth execution policy according to the intent execution stop policy.

Canceling the first intent may also be described as deactivating the first intent. The sixth intent cancellation request information may be used to indicate to stop the first intent. The sixth intent cancellation request information may include the identifier of the first intent. The intent execution stop policy may be used to indicate to stop the second execution policy and the sixth execution policy.

Optionally, after canceling the first intent, the BSS may further delete the first intent. For example, after canceling the first intent, the BSS sends intent deletion request information to the NMS. The NMS receives the intent deletion request information from the BSS, and deletes the first intent based on the intent deletion request information.

The intent deletion request information may include the identifier of the first intent.

Optionally, if the BSS modifies the second condition information in the first intent, the BSS sends fourth intent modification request information to the NMS. The NMS receives the fourth intent modification request information from the BSS, and sends the fourth intent modification request information to the EMS. The EMS receives the fourth intent modification request information from the NMS, obtains a seventh execution policy through translation based on a fourth intent modification request, and executes the second execution policy according to the seventh execution policy.

The fourth intent modification request information may be used to request to modify the second condition information, and may include the identifier of the first intent and third condition information. The third condition information may be used to indicate a second constraint that the network meets in the process in which the NMS performs the management operation on the network. The second constraint is different from the first constraint.

The seventh execution policy may be used to ensure the second constraint in the process in which the EMS executes the second execution policy.

Based on the fifth implementation scenario of the method shown in FIG. 3, when the first intent includes the second condition information, after receiving the first intent from the BSS, the NMS translates the first intent into the second execution policy, and sends the second execution policy and the second condition information to the EMS. In this way, the second constraint is ensured in the process in which the EMS executes the second execution policy based on the second condition information.

Further, optionally, in a sixth implementation scenario of the method shown in FIG. 3, when the first intent includes the first condition information and the second condition information, that the NMS executes the first intent includes: The NMS starts a first process based on the first prerequisite; translates the first intent into a first execution policy; and sends the first execution policy to an EMS when the network meets the first prerequisite. As shown in FIG. 9, in the method shown in FIG. 3, step 304 includes step 901 to step 903.

Step 901: The NMS starts the first process based on the first prerequisite.

For specific descriptions of step 901, refer to descriptions of step 401. Details are not described again.

Step 902: The NMS translates the first intent into the first execution policy.

For specific descriptions of step 902, refer to descriptions of step 601. Details are not described again.

It should be noted that an execution sequence of step 901 and step 902 is not limited in this embodiment of this application. For example, in this embodiment of this application, step 901 may be performed before step 902, or step 902 may be performed before step 901.

Step 903: The NMS sends the first execution policy to the EMS when the network meets the first prerequisite.

Optionally, when it is found in the first process that the network meets the first prerequisite, the NMS sends the first execution policy to the EMS.

For a specific process in which the NMS sends the first execution policy to the EMS, refer to the descriptions of step 602. Details are not described again.

In some embodiments, the BSS may cancel the first intent, and/or may modify the second condition information in the first intent.

Optionally, if the BSS cancels the first intent, the BSS sends the seventh intent cancellation request information to the NMS. The NMS receives the seventh intent cancellation request information from the BSS, stops the first process based on the seventh intent cancellation request information, generates an intent execution stop policy based on the seventh intent cancellation request information, and sends the intent execution stop policy to the EMS. The EMS receives the intent execution stop policy from the NMS, and stops the first execution policy according to the intent execution stop policy.

Canceling the first intent may also be described as deactivating the first intent. The seventh intent cancellation request information may be used to indicate to stop the first intent. The seventh intent cancellation request information may include the identifier of the first intent. The intent execution stop policy may be used to indicate to stop the first execution policy.

Optionally, after canceling the first intent, the BSS may further delete the first intent. For example, after canceling the first intent, the BSS sends intent deletion request information to the NMS. The NMS receives the intent deletion request information from the BSS, and deletes the first intent based on the intent deletion request information.

The intent deletion request information may include the identifier of the first intent.

Optionally, if the BSS modifies the first condition information and the second condition information in the first intent, the BSS sends sixth intent modification request information to the NMS. The NMS receives the sixth intent modification request information from the BSS, updates the first process based on the sixth intent modification request information, obtains a fourth execution policy through translation based on the sixth intent modification request information, and sends the fourth execution policy to the EMS based on a second prerequisite.

The sixth intent modification request information may be used to request to modify the first condition information and the second condition information. The sixth intent modification request information may include the identifier of the first intent, third condition information, and fourth condition information. The third condition information may be used to indicate a second constraint that the network meets in the process in which the NMS performs the management operation on the network. The second constraint is different from the first constraint. The fourth condition information may be used to indicate the second prerequisite that the network meets before the NMS performs the management operation on the network. The second prerequisite is different from the first prerequisite.

The fourth execution policy may be used to: enable the NMS to perform the management operation on the network, and ensure the second constraint in the process in which the NMS performs the management operation on the network. The fourth execution policy may include a fourth intent or a fifth command corresponding to the first intent. The fourth intent may be an intent-NOP. The fifth command may be a command corresponding to the management operation performed by the NMS on the network. The fourth intent and the fifth command may ensure the second constraint.

Optionally, if the fourth execution policy includes the fourth intent, the NMS sends the fourth intent to the EMS when the network meets the second prerequisite. After receiving the fourth intent, the EMS may translate the fourth intent into a sixth command corresponding to the fourth intent, and send the sixth command to a network element corresponding to the fourth intent for execution.

Optionally, if the fourth execution policy includes the fifth command, the NMS sends the fifth command to the EMS when the network meets the second prerequisite. After receiving the fifth command, the EMS may send the fifth command to a network element corresponding to the first intent for execution.

Optionally, for a case in which the BSS modifies the first condition information in the first intent, refer to descriptions of the first implementation scenario in the method shown in FIG. 3. Details are not described again.

Optionally, for a case in which the BSS modifies the second condition information in the first intent, refer to descriptions of the third implementation scenario in the method shown in FIG. 3. Details are not described again.

Based on the sixth implementation scenario of the method shown in FIG. 3, when the first intent includes the first condition information and the second condition information, after receiving the first intent from the BSS, the NMS may start the first process based on the first prerequisite, translate the first intent into the first execution policy, and send the first execution policy to the EMS when the network meets the first prerequisite. In this way, the EMS executes the first execution policy when the network meets the first prerequisite.

Further, optionally, in a seventh implementation scenario of the method shown in FIG. 3, when the first intent includes the first condition information and the second condition information, that the NMS executes the first intent includes: The NMS starts a first process based on the first prerequisite; translates the first intent into a second execution policy and a third execution policy; and sends the second execution policy and the third execution policy to an EMS when the network meets the first prerequisite. As shown in FIG. 10, in the method shown in FIG. 3, step 304 includes step 1001 to step 1003.

Step 1001: The NMS starts the first process based on the first prerequisite.

For specific descriptions of step 1001, refer to descriptions of step 401. Details are not described again.

Step 1002: The NMS translates the first intent into the second execution policy and the third execution policy.

For specific descriptions of step 1002, refer to descriptions of step 701. Details are not described again.

It should be noted that an execution sequence of step 1001 and step 1002 is not limited in this embodiment of this application. For example, in this embodiment of this application, step 1001 may be performed before step 1002, or step 1002 may be performed before step 1001.

Step 1003: The NMS sends the second execution policy and the third execution policy to the EMS when the network meets the first prerequisite.

In some embodiments, when it is found in the first process that the network meets the first prerequisite, the NMS sends the second execution policy and the third execution policy to the EMS.

In some embodiments, after step 1001 and step 1002, the NMS may send the third execution policy to the EMS; and send the second execution policy to the EMS when it is found in the first process that the network meets the first prerequisite.

For a specific process in which the NMS sends the second execution policy and the third execution policy to the EMS, refer to the descriptions of step 702. Details are not described again.

In some embodiments, the BSS may cancel the first intent, and/or may modify the second condition information in the first intent.

Optionally, if the BSS cancels the first intent, the BSS sends eighth intent cancellation request information to the NMS. The NMS receives the eighth intent cancellation request information from the BSS, stops the first process based on the eighth intent cancellation request information, generates an intent execution stop policy and an execution stop policy of the first constraint based on the eighth intent cancellation request information, and sends the intent execution stop policy and the execution stop policy of the first constraint to the EMS. The EMS receives the intent execution stop policy and the execution stop policy of the first constraint from the NMS, stops the second execution policy according to the intent execution stop policy, and stops the third execution policy according to the execution stop policy of the first constraint.

Canceling the first intent may also be described as deactivating the first intent. The eighth intent cancellation request information may be used to indicate to stop the first intent. The eighth intent cancellation request information may include the identifier of the first intent. The intent execution stop policy may be used to indicate to stop the second execution policy. The execution stop policy of the first constraint may be used to indicate to stop the third execution policy.

Optionally, after canceling the first intent, the BSS may further delete the first intent. For example, after canceling the first intent, the BSS sends intent deletion request information to the NMS. The NMS receives the intent deletion request information from the BSS, and deletes the first intent based on the intent deletion request information.

The intent deletion request information may include the identifier of the first intent.

Optionally, if the BSS modifies the first condition information and the second condition information in the first intent, the BSS sends seventh intent modification request information to the NMS. The NMS receives the seventh intent modification request information from the BSS, updates the first process based on the seventh intent modification request information, obtains a fifth execution policy through translation based on the seventh intent modification request information, and sends the fifth execution policy to the EMS based on a second prerequisite. The EMS receives the fifth execution policy from the NMS, and a second constraint is ensured in a process in which the EMS executes the second execution policy according to the fifth execution policy.

The seventh intent modification request information may be used to request to modify the first condition information and the second condition information. The seventh intent modification request information may include the identifier of the first intent, third condition information, and fourth condition information. The third condition information may be used to indicate the second constraint that the network meets in the process in which the NMS performs the management operation on the network. The second constraint is different from the first constraint. The fourth condition information may be used to indicate the second prerequisite that the network meets before the NMS performs the management operation on the network. The second prerequisite is different from the first prerequisite.

The fifth execution policy may be used to ensure the second constraint in the process in which the NMS performs the management operation on the network.

Optionally, for a case in which the BSS modifies the first condition information in the first intent, refer to descriptions of the first implementation scenario in the method shown in FIG. 3. Details are not described again.

Optionally, for a case in which the BSS modifies the second condition information in the first intent, refer to descriptions of the fourth implementation scenario in the method shown in FIG. 3. Details are not described again.

Based on the seventh implementation scenario of the method shown in FIG. 3, when the first intent includes the first condition information and the second condition information, after receiving the first intent from the BSS, the NMS may start the first process based on the first prerequisite, translate the first intent into the second execution policy and the third execution policy, and send the second execution policy and the third execution policy to the EMS when the network meets the first prerequisite. In this way, the EMS executes the second execution policy when the network meets the first prerequisite, and the first constraint is ensured in the process in which the EMS executes the second execution policy.

Further, optionally, in an eighth implementation scenario of the method shown in FIG. 3, when the first intent includes the first condition information and the second condition information, that the NMS executes the first intent includes: The NMS translates the first intent into a second execution policy, and sends the second execution policy, the first condition information, and the second condition information to an EMS. As shown in FIG. 11, in the method shown in FIG. 3, step 304 includes step 1101 and step 1102.

Step 1101: The NMS translates the first intent into the second execution policy.

For specific descriptions of step 1101, refer to descriptions of step 501. Details are not described again.

Step 1102: The NMS sends the second execution policy, the first condition information, and the second condition information to the EMS.

Optionally, if the second execution policy includes the second intent, the NMS sends the second intent, the first condition information, and the second condition information to the EMS. After receiving the second intent, the first condition information, and the second condition information, the EMS may translate the second intent into a second command corresponding to the second intent, and translate the second condition information into a sixth execution policy, where the sixth execution policy is used to indicate to ensure the first constraint in a process in which the EMS executes the second execution policy. The EMS starts a second process based on the first condition information, where the second process may be used to monitor whether the network meets the first prerequisite. If it is found in the second process that the network meets the first prerequisite, the EMS sends the second command and the sixth execution policy to a network element corresponding to the second intent for execution.

Optionally, if the second execution policy includes the first command, the NMS sends the first command, the first condition information, and the second condition information to the EMS. After receiving the first command, the first condition information, and the second condition information, the EMS may translate the second condition information into a sixth execution policy, and start a second process based on the first condition information. When it is found in the second process that the network meets the first prerequisite, the EMS sends the first command and the sixth execution policy to a network element corresponding to the first intent for execution.

It should be noted that, if the EMS cannot understand the first condition information and/or the second condition information, for example, cannot identify the first condition information and/or the second condition information, the NMS may further convert the first condition information and/or the second condition information into information that can be understood by a lower-layer system, and then send, to the EMS, the information that can be understood by the lower-layer system.

It should be noted that the NMS may send the second execution policy, the first condition information, and the second condition information through a same piece of signaling to the EMS, or may send the second execution policy, the first condition information, and the second condition information through different pieces of signaling to the EMS. This is not limited.

In some embodiments, the BSS may cancel the first intent, and/or may modify the first condition information in the first intent.

Optionally, if the BSS cancels the first intent, the BSS sends ninth intent cancellation request information to the NMS. The NMS receives the ninth intent cancellation request information from the BSS, generates an intent execution stop policy based on the ninth intent cancellation request information, and sends the intent execution stop policy to the EMS. The EMS receives the intent execution stop policy from the NMS, and stops the second process, the second execution policy, and the sixth execution policy according to the intent execution stop policy.

Canceling the first intent may also be described as deactivating the first intent. The ninth intent cancellation request information may be used to indicate to stop the first intent. The ninth intent cancellation request information may include the identifier of the first intent. The intent execution stop policy may be used to indicate to stop the second process, the second execution policy, and the sixth execution policy.

Optionally, after canceling the first intent, the BSS may further delete the first intent. For example, after canceling the first intent, the BSS sends intent deletion request information to the NMS. The NMS receives the intent deletion request information from the BSS, and deletes the first intent based on the intent deletion request information.

The intent deletion request information may include the identifier of the first intent.

Optionally, if the BSS modifies the first condition information and the second condition information in the first intent, the BSS sends fourth intent modification request information to the NMS. The NMS receives the fourth intent modification request information from the BSS, and sends the fourth intent modification request information to the EMS. The EMS receives the fourth intent modification request information from the NMS, updates the second process based on the fourth intent modification request information, obtains a seventh execution policy through translation based on a fourth intent modification request, and executes the second execution policy according to the seventh execution policy when the network meets a second prerequisite.

The fourth intent modification request information may be used to request to modify the first condition information and the second condition information, and may include the identifier of the first intent, the third condition information, and the fourth condition information. The third condition information may be used to indicate a second constraint that the network meets in the process in which the NMS performs the management operation on the network. The second constraint is different from the first constraint. The fourth condition information may be used to indicate the second prerequisite that the network meets before the NMS performs the management operation on the network. The second prerequisite is different from the first prerequisite.

The seventh execution policy may be used to ensure the second constraint in the process in which the EMS executes the second execution policy.

Optionally, for a case in which the BSS modifies the first condition information in the first intent, refer to descriptions of the second implementation scenario in the method shown in FIG. 3. Details are not described again.

Optionally, for a case in which the BSS modifies the second condition information in the first intent, refer to descriptions of the fifth implementation scenario in the method shown in FIG. 3. Details are not described again.

Based on the eighth implementation scenario of the method shown in FIG. 3, when the first intent includes the first condition information and the second condition information, after receiving the first intent from the BSS, the NMS may translate the first intent into the second execution policy, and send the second execution policy, the first condition information, and the second condition information to the EMS. In this way, the EMS executes the second execution policy when the network meets the first prerequisite, and the first constraint is ensured in the process in which the EMS executes the second execution policy.

The foregoing mainly describes the solutions provided in embodiments of this application from a perspective of interaction between network elements. It may be understood that, to implement the foregoing functions, the NMS, the BSS, or the like includes a corresponding hardware structure and/or software module for implementing each function. A person skilled in the art should easily be aware that, in combination with units and algorithm operations of the examples described in embodiments disclosed in this specification, this application may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, the NMS or the BSS may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in embodiments of this application, division into the modules is an example, and is merely logical function division. During actual implementation, another division manner may be used.

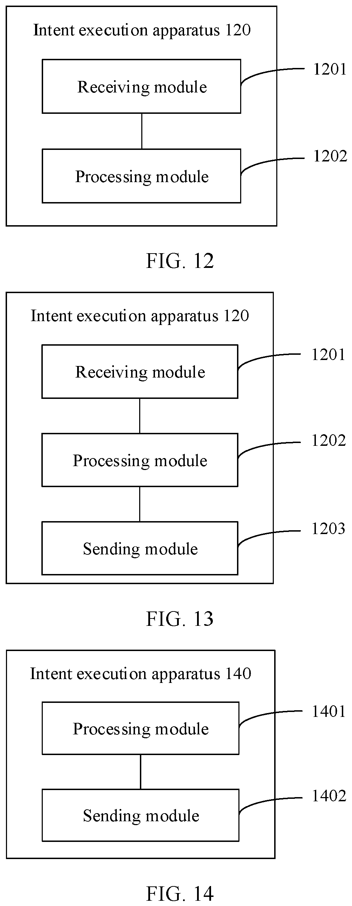

For example, when function modules are obtained through division in an integrated manner, FIG. 12 is a schematic diagram of a structure of an intent execution apparatus 120. The intent execution apparatus 120 may be an NMS, a chip or a system on chip in the NMS, or another combined device, component, or the like that can implement a function of the NMS. The intent execution apparatus 120 may be configured to execute a function of the NMS in the foregoing embodiments.

In a possible implementation, the intent execution apparatus 120 shown in FIG. 12 includes a receiving module 1201 and a processing module 1202.

The receiving module 1201 is configured to receive a first intent from a BSS, where the first intent is used to indicate the intent execution apparatus 120 to perform a management operation on a network, the first intent includes first condition information, and the first condition information is used to indicate a first prerequisite that the network meets before the intent execution apparatus 120 performs the management operation on the network.

The processing module 1202 is configured to execute the first intent based on the first prerequisite.

Optionally, the processing module 1202 is specifically configured to start a first process based on the first prerequisite, where the first process is used to monitor whether the network meets the first prerequisite. The processing module 1202 is further specifically configured to execute the first intent according to the first process.

Optionally, the first intent further includes second condition information, and the second condition information is used to indicate a first constraint that the network meets in a process in which the intent execution apparatus 120 performs the management operation on the network. The processing module 1202 is specifically configured to translate the first intent into a first execution policy, where the first execution policy is used to: enable the intent execution apparatus 120 to perform the management operation on the network, and ensure the first constraint in the process in which the intent execution apparatus 120 performs the management operation on the network. The processing module 1202 is further specifically configured to send the first execution policy to an element management system EMS when the network meets the first prerequisite.

Optionally, the first intent further includes second condition information, and the second condition information is used to indicate a first constraint that the network meets in a process in which the intent execution apparatus 120 performs the management operation on the network. The processing module 1202 is specifically configured to translate the first intent into a second execution policy and a third execution policy, where the second execution policy is used to enable the intent execution apparatus 120 to perform the management operation on the network, and the third execution policy is used to ensure the first constraint in the process in which the intent execution apparatus 120 performs the management operation on the network. The processing module 1202 is further specifically configured to send the third execution policy to an EMS. The processing module 1202 is further specifically configured to send the second execution policy to the EMS when the network meets the first prerequisite.

Optionally, the processing module 1202 is further configured to stop maintaining the first intent when the network does not meet the first prerequisite.

Optionally, the processing module 1202 is specifically configured to translate the first intent into a second execution policy, where the second execution policy is used to enable the intent execution apparatus 120 to perform the management operation on the network. The processing module 1202 is further specifically configured to send the second execution policy and the first condition information to an EMS.

Optionally, if the first intent further includes second condition information, and the second condition information is used to indicate a first constraint that the network meets in a process in which the intent execution apparatus 120 performs the management operation on the network, the processing module 1202 is further specifically configured to send the second condition information to the EMS.

Optionally, the receiving module 1201 is further configured to receive first intent cancellation request information from the BSS, where the first intent cancellation request information is used to request to stop executing the first intent. The processing module 1202 is further configured to stop the first process based on the first intent cancellation request information.

Optionally, as shown in FIG. 13, the intent execution apparatus 120 further includes a sending module 1203. The receiving module 1201 is further configured to receive second intent cancellation request information from the BSS, where the second intent cancellation request information is used to request to stop executing the first intent. The processing module 1202 is further configured to stop the first process based on the second intent cancellation request information. The processing module 1202 is further configured to generate an intent execution stop policy and an execution stop policy of the first constraint based on the second intent cancellation request information, where the intent execution stop policy is used to indicate to stop executing the second execution policy, and the execution stop policy of the first constraint is used to indicate to stop executing the third execution policy. The sending module 1203 is configured to send the intent execution stop policy to the EMS. The sending module 1203 is further configured to send the execution stop policy of the first constraint to the EMS.

Optionally, the receiving module 1201 is further configured to receive first intent modification request information from the BSS, where the first intent modification request information is used to request to modify the first condition information. The processing module 1202 is further configured to update the first process based on the first intent modification request information.

Optionally, the receiving module 1201 is further configured to receive second intent modification request information from the BSS, where the second intent modification request information includes third condition information, the third condition information is used to indicate a second constraint that the network meets in the process in which the intent execution apparatus 120 performs the management operation on the network, and the second constraint is different from the first constraint. The processing module 1202 is further configured to obtain a fourth execution policy through translation based on the second intent modification request information, where the fourth execution policy is used to: enable the intent execution apparatus 120 to perform the management operation on the network, and ensure the second constraint in the process in which the intent execution apparatus 120 performs the management operation on the network. The sending module 1203 is configured to send the fourth execution policy to the EMS.

Optionally, the receiving module 1201 is further configured to receive third intent modification request information from the BSS, where the third intent modification request information includes third condition information, the third condition information is used to indicate a second constraint that the network meets in the process in which the intent execution apparatus 120 performs the management operation on the network, and the second constraint is different from the first constraint. The processing module 1202 is further configured to obtain a fifth execution policy through translation based on the third intent modification request information, where the fifth execution policy is used to ensure the second constraint in the process in which the intent execution apparatus 120 performs the management operation on the network. The sending module 1203 is further configured to send the fifth execution policy to the EMS.

Optionally, the receiving module 1201 is further configured to receive fourth intent modification request information from the BSS, where the fourth intent modification request information includes third condition information and/or fourth condition information, the third condition information is used to indicate a second constraint that the network meets in the process in which the intent execution apparatus 120 performs the management operation on the network, the fourth condition information is used to indicate a second prerequisite that the network meets before the intent execution apparatus 120 performs the management operation on the network, the second constraint is different from the first constraint, and the second prerequisite is different from the first prerequisite. The sending module 1203 is configured to send the third condition information and/or the fourth condition information to the EMS.

All related content of the operations in the foregoing method embodiments may be cited in function descriptions of corresponding function modules. Details are not described herein again.

In this embodiment, the intent execution apparatus 120 is presented in a form of function modules obtained through division in an integrated manner. The "module" herein may be a specific ASIC, a circuit, a processor executing one or more software or firmware programs, a memory, an integrated logic circuit, and/or another device that can provide the foregoing function. In a simple embodiment, a person skilled in the art may figure out that the intent execution apparatus 120 may be in a form shown in FIG. 2.

For example, the processor 201 in FIG. 2 may invoke the computer-executable instructions stored in the memory 203, to enable the intent execution apparatus 120 to perform the intent execution method in the foregoing method embodiments.

For example, functions/implementation processes of the receiving module 1201, the processing module 1202, and the sending module 1203 in FIG. 13 may be implemented by the processor 201 in FIG. 2 by invoking the computer-executable instructions stored in the memory 203. Alternatively, a function/an implementation process of the processing module 1202 in FIG. 13 may be implemented by the processor 201 in FIG. 2 by invoking the computer-executable instructions stored in the memory 203, and functions/implementation processes of the receiving module 1201 and the sending module 1203 in FIG. 13 may be implemented by the communication interface 204 in FIG. 2.

The intent execution apparatus 120 provided in this embodiment can perform the foregoing intent execution method. Therefore, for technical effects that can be achieved by the intent execution apparatus 120, refer to the foregoing method embodiments. Details are not described herein again.

For example, when function modules are obtained through division in an integrated manner, FIG. 14 is a schematic diagram of a structure of an intent execution apparatus 140. The intent execution apparatus 140 may be a BSS, a chip or a system on chip in the BSS, or another combined device, component, or the like that can implement a function of the BSS. The intent execution apparatus 140 may be configured to execute a function of the BSS in the foregoing embodiments.

In a possible implementation, the intent execution apparatus 140 shown in FIG. 14 includes a processing module 1401 and a sending module 1402.

The processing module 1401 is configured to determine to execute a first intent, where the first intent is used to indicate an NMS to perform a management operation on a network, the first intent includes first condition information, and the first condition information is used to indicate a first prerequisite that the network meets before the NMS performs the management operation on the network.

The sending module 1402 is configured to send the first intent to the NMS.

Optionally, the first intent further includes second condition information, and the second condition information is used to indicate a first constraint that the network meets in a process in which the NMS performs the management operation on the network.

Optionally, the sending module 1402 is further configured to send first intent modification request information to the NMS, where the first intent modification request information is used to request to modify the first condition information.

Optionally, the sending module 1402 is further configured to send second intent modification request information to the NMS, where the second intent modification request information includes third condition information, the third condition information is used to indicate a second constraint that the network meets in the process in which the NMS performs the management operation on the network, and the second constraint is different from the first constraint.

Optionally, the sending module 1402 is further configured to send fourth intent modification request information to the NMS, where the fourth intent modification request information includes third condition information and/or fourth condition information, the third condition information is used to indicate a second constraint that the network meets in the process in which the NMS performs the management operation on the network, the fourth condition information is used to indicate a second prerequisite that the network meets before the NMS performs the management operation on the network, the second constraint is different from the first constraint, and the second prerequisite is different from the first prerequisite.

All related content of the operations in the foregoing method embodiments may be cited in function descriptions of corresponding function modules. Details are not described herein again.

In this embodiment, the intent execution apparatus 140 is presented in a form of function modules obtained through division in an integrated manner. The "module" herein may be a specific ASIC, a circuit, a processor executing one or more software or firmware programs, a memory, an integrated logic circuit, and/or another device that can provide the foregoing function. In a simple embodiment, a person skilled in the art may figure out that the intent execution apparatus 140 may be in a form shown in FIG. 2.

For example, the processor 201 in FIG. 2 may invoke the computer-executable instructions stored in the memory 203, to enable the intent execution apparatus 140 to perform the intent execution method in the foregoing method embodiments.

For example, functions/implementation processes of the processing module 1401 and the sending module 1402 in FIG. 14 may be implemented by the processor 201 in FIG. 2 by invoking the computer-executable instructions stored in the memory 203. Alternatively, a function/an implementation process of the processing module 1401 in FIG. 14 may be implemented by the processor 201 in FIG. 2 by invoking the computer-executable instructions stored in the memory 203, and a function/an implementation process of the sending module 1402 in FIG. 14 may be implemented by the communication interface 204 in FIG. 2.

The intent execution apparatus 140 provided in this embodiment can perform the foregoing intent execution method. Therefore, for technical effects that can be achieved by the intent execution apparatus 140, refer to the foregoing method embodiments. Details are not described herein again.

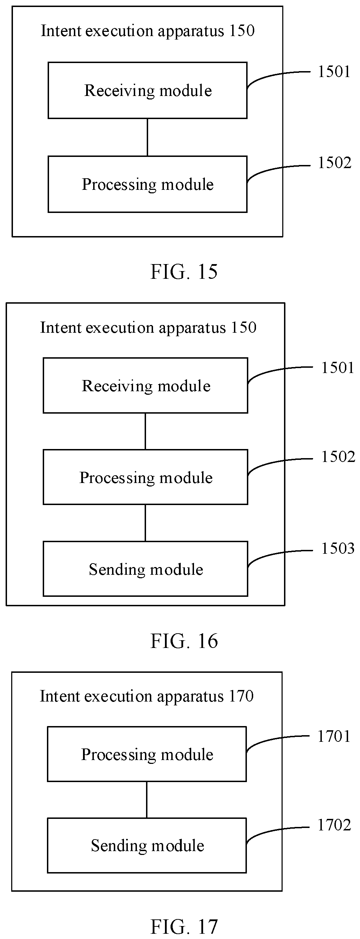

For example, when function modules are obtained through division in an integrated manner, FIG. 15 is a schematic diagram of a structure of an intent execution apparatus 150. The intent execution apparatus 150 may be an NMS, a chip or a system on chip in the NMS, or another combined device, component, or the like that can implement a function of the NMS. The intent execution apparatus 150 may be configured to execute a function of the NMS in the foregoing embodiments.

In a possible implementation, the intent execution apparatus 150 shown in FIG. 15 includes a receiving module 1501 and a processing module 1502.

The receiving module 1501 is configured to receive a first intent from a BSS, where the first intent is used to indicate the intent execution apparatus 150 to perform a management operation on a network, the first intent includes second condition information, and the second condition information is used to indicate a first constraint that the network meets in a process in which the intent execution apparatus 150 performs the management operation on the network.

The processing module 1502 is configured to execute the first intent based on the first constraint.

Optionally, the processing module 1502 is specifically configured to translate the first intent into a first execution policy, where the first execution policy is used to: enable the intent execution apparatus 150 to perform the management operation on the network, and ensure the first constraint in the process in which the intent execution apparatus 150 performs the management operation on the network. The processing module 1502 is further specifically configured to send the first execution policy to an EMS.

Optionally, the processing module 1502 is specifically configured to translate the first intent into a second execution policy and a third execution policy, where the second execution policy is used to enable the intent execution apparatus 150 to perform the management operation on the network, and the third execution policy is used to ensure the first constraint in the process in which the intent execution apparatus 150 performs the management operation on the network. The processing module 1502 is further specifically configured to send the third execution policy to an EMS. The processing module 1502 is further specifically configured to send the second execution policy to the EMS.

Optionally, the processing module 1502 is specifically configured to translate the first intent into a second execution policy, where the second execution policy is used to enable the intent execution apparatus 150 to perform the management operation on the network. The processing module 1502 is further specifically configured to send the second execution policy and the second condition information to an EMS.

Optionally, the first intent further includes first condition information, and the first condition information is used to indicate a first prerequisite that the network meets before the intent execution apparatus 150 performs the management operation on the network.

Optionally, the processing module 1502 is further configured to start a first process based on the first condition information, where the first process is used by the intent execution apparatus 150 to monitor whether the network meets the first prerequisite.

Optionally, the processing module 1502 is further configured to stop maintaining the first intent when the network does not meet the first prerequisite.

Optionally, the first intent further includes first condition information, and the first condition information is used to indicate a first prerequisite that the network meets before the intent execution apparatus 150 performs the management operation on the network. The processing module 1502 is specifically configured to send the first condition information to the EMS.

Optionally, as shown in FIG. 16, the intent execution apparatus 150 further includes a sending module 1503. The receiving module 1501 is further configured to receive fifth intent cancellation request information from the BSS, where the fifth intent cancellation request information is used to request to stop executing the first intent. The processing module 1502 is further configured to generate an intent execution stop policy and an execution stop policy of the first constraint based on the fifth intent cancellation request information, where the intent execution stop policy is used to indicate to stop executing the second execution policy, and the execution stop policy of the first constraint is used to indicate to stop executing the third execution policy. The sending module 1503 is configured to send the intent execution stop policy to the EMS. The sending module 1503 is further configured to send the execution stop policy of the first constraint to the EMS.

Optionally, the receiving module 1501 is further configured to receive second intent modification request information from the BSS, where the second intent modification request information includes third condition information, the third condition information is used to indicate a second constraint that the network meets in the process in which the intent execution apparatus 150 performs the management operation on the network, and the second constraint is different from the first constraint. The processing module 1502 is further configured to obtain a fourth execution policy through translation based on the second intent modification request information, where the fourth execution policy is used to: enable the intent execution apparatus 150 to perform the management operation on the network, and ensure the second constraint in the process in which the intent execution apparatus 150 performs the management operation on the network. The sending module 1503 is configured to send the fourth execution policy to the EMS.

Optionally, the receiving module 1501 is configured to receive third intent modification request information from the BSS, where the third intent modification request information includes third condition information, the third condition information is used to indicate a second constraint that the network meets in the process in which the intent execution apparatus 150 performs the management operation on the network, and the second constraint is different from the first constraint. The processing module 1502 is further configured to obtain a fifth execution policy through translation based on the third intent modification request information, where the fifth execution policy is used to ensure the second constraint in the process in which the intent execution apparatus 150 performs the management operation on the network. The sending module 1503 is configured to send the fifth execution policy to the EMS.

Optionally, the receiving module 1501 is further configured to receive fourth intent modification request information from the BSS, where the fourth intent modification request information includes third condition information, the third condition information is used to indicate a second constraint that the network meets in the process in which the intent execution apparatus 150 performs the management operation on the network, and the second constraint is different from the first constraint. The sending module 1503 is configured to send the third condition information to the EMS.

Optionally, the receiving module 1501 is further configured to receive first intent modification request information from the BSS, where the first intent modification request information is used to request to modify the first condition information. The processing module 1502 is further configured to update the first process based on the first intent modification request information.

Optionally, the receiving module 1501 is further configured to receive fourth intent modification request information from the BSS, where the fourth intent modification request information includes fourth condition information, the fourth condition information is used to indicate a second prerequisite that the network meets before the intent execution apparatus 150 performs the management operation on the network, and the second prerequisite is different from the first prerequisite. The sending module 1503 is configured to send the fourth condition information to the EMS.

All related content of the operations in the foregoing method embodiments may be cited in function descriptions of corresponding function modules. Details are not described herein again.

In this embodiment, the intent execution apparatus 150 is presented in a form of function modules obtained through division in an integrated manner. The "module" herein may be a specific ASIC, a circuit, a processor executing one or more software or firmware programs, a memory, an integrated logic circuit, and/or another device that can provide the foregoing function. In a simple embodiment, a person skilled in the art may figure out that the intent execution apparatus 150 may be in a form shown in FIG. 2.

For example, the processor 201 in FIG. 2 may invoke the computer-executable instructions stored in the memory 203, to enable the intent execution apparatus 150 to perform the intent execution method in the foregoing method embodiments.

For example, functions/implementation processes of the receiving module 1501, the processing module 1502, and the sending module 1503 in FIG. 16 may be implemented by the processor 201 in FIG. 2 by invoking the computer-executable instructions stored in the memory 203. Alternatively, a function/an implementation process of the processing module 1502 in FIG. 16 may be implemented by the processor 201 in FIG. 2 by invoking the computer-executable instructions stored in the memory 203, and functions/implementation processes of the receiving module 1501 and the sending module 1503 in FIG. 16 may be implemented by the communication interface 204 in FIG. 2.

The intent execution apparatus 150 provided in this embodiment can perform the foregoing intent execution method. Therefore, for technical effects that can be achieved by the intent execution apparatus 150, refer to the foregoing method embodiments. Details are not described herein again.

For example, when function modules are obtained through division in an integrated manner, FIG. 17 is a schematic diagram of a structure of an intent execution apparatus 170. The intent execution apparatus 170 may be a BSS, a chip or a system on chip in the BSS, or another combined device, component, or the like that can implement a function of the BSS. The intent execution apparatus 170 may be configured to execute a function of the BSS in the foregoing embodiments.

In a possible implementation, the intent execution apparatus 170 shown in FIG. 17 includes a processing module 1701 and a sending module 1702.

The processing module 1701 is configured to determine to execute a first intent, where the first intent is used to indicate an NMS to perform a management operation on a network, the first intent includes second condition information, and the second condition information is used to indicate a first constraint that the network meets in a process in which the NMS performs the management operation on the network.

The sending module 1702 is configured to send the first intent to the NMS.

Optionally, the first intent further includes first condition information, and the first condition information is used to indicate a first prerequisite that the network meets before the NMS performs the management operation on the network.

Optionally, the sending module 1702 is further configured to send fifth intent cancellation request information to the NMS, where the fifth intent cancellation request information is used to request to stop executing the first intent.

Optionally, the sending module 1702 is further configured to send second intent modification request information to the NMS, where the second intent modification request information includes third condition information, the third condition information is used to indicate a second constraint that the network meets in the process in which the NMS performs the management operation on the network, and the second constraint is different from the first constraint.

Optionally, the sending module 1702 is further configured to send first intent modification request information to the NMS, where the first intent modification request information is used to request to modify the first condition information.

Optionally, the sending module 1702 is further configured to send fourth intent modification request information to the NMS, where the fourth intent modification request information includes fourth condition information, the fourth condition information is used to indicate a second prerequisite that the network meets before the NMS performs the management operation on the network, and the second prerequisite is different from the first prerequisite.

All related content of the operations in the foregoing method embodiments may be cited in function descriptions of corresponding function modules. Details are not described herein again.

In this embodiment, the intent execution apparatus 170 is presented in a form of function modules obtained through division in an integrated manner. The "module" herein may be a specific ASIC, a circuit, a processor executing one or more software or firmware programs, a memory, an integrated logic circuit, and/or another device that can provide the foregoing function. In a simple embodiment, a person skilled in the art may figure out that the intent execution apparatus 170 may be in a form shown in FIG. 2.

For example, the processor 201 in FIG. 2 may invoke the computer-executable instructions stored in the memory 203, to enable the intent execution apparatus 170 to perform the intent execution method in the foregoing method embodiments.

For example, functions/implementation processes of the processing module 1701 and the sending module 1702 in FIG. 17 may be implemented by the processor 201 in FIG. 2 by invoking the computer-executable instructions stored in the memory 203. Alternatively, a function/an implementation process of the processing module 1701 in FIG. 17 may be implemented by the processor 201 in FIG. 2 by invoking the computer-executable instructions stored in the memory 203, and a function/an implementation process of the sending module 1702 in FIG. 17 may be implemented by the communication interface 204 in FIG. 2.

The intent execution apparatus 170 provided in this embodiment can perform the foregoing intent execution method. Therefore, for technical effects that can be achieved by the intent execution apparatus 170, refer to the foregoing method embodiments. Details are not described herein again.

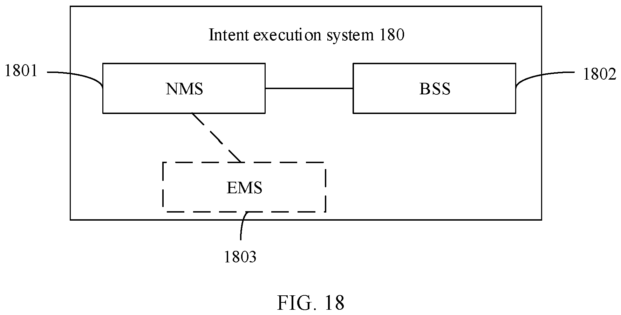

FIG. 18 is a schematic structure diagram of an intent execution system. As shown in FIG. 18, the intent execution system 180 may include an NMS 1801 and a BSS 1802. It should be noted that FIG. 18 is merely an example of an accompanying drawing. Apparatuses included in the intent execution system 180 shown in FIG. 18 and a quantity of the apparatuses are not limited in this embodiment of this application.

The NMS 1801 has a function of the intent execution apparatus 120 shown in FIG. 12 or FIG. 13, and may be configured to: receive a first intent from the BSS 1802, and execute the first intent based on a first prerequisite. Alternatively, the NMS 1801 has a function of the intent execution apparatus 150 shown in FIG. 15 or FIG. 16, and may be configured to: receive a first intent from the BSS 1802, and execute the first intent based on a first constraint.

The BSS 1802 has a function of the intent execution apparatus 140 shown in FIG. 14, and may be configured to: determine to execute a first intent, and send the first intent to the NMS 1801. Alternatively, the BSS 1802 has a function of the intent execution apparatus 170 shown in FIG. 17, and may be configured to: determine to execute a first intent, and send the first intent to the NMS 1801.

Optionally, the intent execution system 180 further includes an EMS 1803.

The NMS 1801 is further configured to send, to the EMS 1803, an execution policy (for example, a first execution policy, a second execution policy, or a third execution policy) translated based on the first intent, and the EMS 1803 may receive the execution policy from the NMS 1801.

It should be noted that all related content of the steps in the foregoing method embodiments may be cited in function descriptions of corresponding network elements of the intent execution system 180. Details are not described herein again.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, the term "comprising" (comprising) does not exclude another component or another step, and "a" or "one" does not exclude a case of a plurality. A single processor or another unit may implement several functions enumerated in the claims. Some measures are recorded in dependent claims that are different from each other, but this does not mean that these measures cannot be combined to produce a great effect.

Although this application is described with reference to specific features and embodiments thereof, it is clear that various modifications and combinations may be made to this application without departing from the spirit and scope of this application. Correspondingly, the specification and the accompanying drawings are merely example descriptions in this application defined by the appended claims, and are intended to cover any of or all modifications, variations, combinations, or equivalents within the scope of this application. It is clear that a person skilled in the art can make various modifications and variations to this application without departing from the spirit and scope of this application. In this way, if these modifications and variations to this application fall within the scope of the claims of this application and their equivalent technologies, this application is also intended to cover these modifications and variations.

## Claims

1. An intent execution method, wherein the method comprises:
receiving, by a network management system NMS, a first intent from a business support system BSS, wherein the first intent is used to indicate the NMS to perform a management operation on a network, the first intent comprises first condition information, and the first condition information is used to indicate a first prerequisite that the network meets before the NMS performs the management operation on the network; and
executing, by the NMS, the first intent based on the first prerequisite.

2. The method according to claim 1, wherein the executing, by the NMS, the first intent based on the first prerequisite comprises:
starting, by the NMS, a first process based on the first prerequisite, wherein the first process is used to monitor whether the network meets the first prerequisite; and
executing, by the NMS, the first intent according to the first process.

3. The method according to claim 1 or 2, wherein the first intent further comprises second condition information, the second condition information is used to indicate a first constraint that the network meets in a process in which the NMS performs the management operation on the network, and the executing, by the NMS, the first intent based on the first prerequisite comprises:
translating, by the NMS, the first intent into a first execution policy, wherein the first execution policy is used to: enable the NMS to perform the management operation on the network, and ensure the first constraint in the process in which the NMS performs the management operation on the network; and
sending, by the NMS, the first execution policy to an element management system EMS when the network meets the first prerequisite.

4. The method according to claim 1 or 2, wherein the first intent further comprises second condition information, the second condition information is used to indicate a first constraint that the network meets in a process in which the NMS performs the management operation on the network, and the executing, by the NMS, the first intent based on the first prerequisite comprises:
translating, by the NMS, the first intent into a second execution policy and a third execution policy, wherein the second execution policy is used to enable the NMS to perform the management operation on the network, and the third execution policy is used to ensure the first constraint in the process in which the NMS performs the management operation on the network;
sending, by the NMS, the third execution policy to an element management system EMS; and
sending, by the NMS, the second execution policy to the element management system EMS when the network meets the first prerequisite.

5. The method according to any one of claims 1 to 4, wherein the method further comprises:
stopping, by the NMS, maintaining the first intent when the network does not meet the first prerequisite.

6. The method according to claim 1, wherein the executing, by the NMS, the first intent based on the first prerequisite comprises:
translating, by the NMS, the first intent into a second execution policy, wherein the second execution policy is used to enable the NMS to perform the management operation on the network; and
sending, by the NMS, the second execution policy and the first condition information to an element management system EMS.

7. The method according to claim 6, wherein if the first intent further comprises second condition information, and the second condition information is used to indicate a first constraint that the network meets in a process in which the NMS performs the management operation on the network, the executing, by the NMS, the first intent based on the first prerequisite further comprises:
sending, by the NMS, the second condition information to the EMS.

8. The method according to claim 2, wherein the method further comprises:
receiving, by the NMS, first intent cancellation request information from the BSS, wherein the first intent cancellation request information is used to request to stop executing the first intent; and
stopping, by the NMS, the first process based on the first intent cancellation request information.

9. The method according to claim 4, wherein the method further comprises:
receiving, by the NMS, second intent cancellation request information from the BSS, wherein the second intent cancellation request information is used to request to stop executing the first intent;
stopping, by the NMS, the first process based on the second intent cancellation request information;
generating, by the NMS, an intent execution stop policy and an execution stop policy of the first constraint based on the second intent cancellation request information, wherein the intent execution stop policy is used to indicate to stop executing the second execution policy, and the execution stop policy of the first constraint is used to indicate to stop executing the third execution policy;
sending, by the NMS, the intent execution stop policy to the EMS; and
sending, by the NMS, the execution stop policy of the first constraint to the EMS.

10. The method according to claim 2 or 8, wherein the method further comprises:
receiving, by the NMS, first intent modification request information from the BSS, wherein the first intent modification request information is used to request to modify the first condition information; and
updating, by the NMS, the first process based on the first intent modification request information.

11. The method according to claim 3, wherein the method further comprises:
receiving, by the NMS, second intent modification request information from the BSS, wherein the second intent modification request information comprises third condition information, the third condition information is used to indicate a second constraint that the network meets in the process in which the NMS performs the management operation on the network, and the second constraint is different from the first constraint;
obtaining, by the NMS, a fourth execution policy through translation based on the second intent modification request information, wherein the fourth execution policy is used to: enable the NMS to perform the management operation on the network, and ensure the second constraint in the process in which the NMS performs the management operation on the network; and
sending, by the NMS, the fourth execution policy to the EMS.

12. The method according to claim 4 or 9, wherein the method further comprises:
receiving, by the NMS, third intent modification request information from the BSS, wherein the third intent modification request information comprises third condition information, the third condition information is used to indicate a second constraint that the network meets in the process in which the NMS performs the management operation on the network, and the second constraint is different from the first constraint;
obtaining, by the NMS, a fifth execution policy through translation based on the third intent modification request information, wherein the fifth execution policy is used to ensure the second constraint in the process in which the NMS performs the management operation on the network; and
sending, by the NMS, the fifth execution policy to the EMS.

13. The method according to claim 7, wherein the method further comprises:
receiving, by the NMS, fourth intent modification request information from the BSS, wherein the fourth intent modification request information comprises third condition information and/or fourth condition information, the third condition information is used to indicate a second constraint that the network meets in the process in which the NMS performs the management operation on the network, the fourth condition information is used to indicate a second prerequisite that the network meets before the NMS performs the management operation on the network, the second constraint is different from the first constraint, and the second prerequisite is different from the first prerequisite; and
sending, by the NMS, the third condition information and/or the fourth condition information to the EMS.

14. An intent execution method, wherein the method comprises:
determining, by a business support system BSS, to execute a first intent, wherein the first intent is used to indicate a network management system NMS to perform a management operation on a network, the first intent comprises first condition information, and the first condition information is used to indicate a first prerequisite that the network meets before the NMS performs the management operation on the network; and
sending, by the BSS, the first intent to the NMS.

15. The method according to claim 14, wherein the first intent further comprises second condition information, and the second condition information is used to indicate a first constraint that the network meets in a process in which the NMS performs the management operation on the network.

16. The method according to claim 14, wherein the method further comprises:
sending, by the BSS, first intent modification request information to the NMS, wherein the first intent modification request information is used to request to modify the first condition information.

17. The method according to claim 15, wherein the method further comprises:
sending, by the BSS, second intent modification request information to the NMS, wherein the second intent modification request information comprises third condition information, the third condition information is used to indicate a second constraint that the network meets in the process in which the NMS performs the management operation on the network, and the second constraint is different from the first constraint.

18. The method according to claim 15, wherein the method further comprises:
sending, by the BSS, fourth intent modification request information to the NMS, wherein the fourth intent modification request information comprises third condition information and/or fourth condition information, the third condition information is used to indicate a second constraint that the network meets in the process in which the NMS performs the management operation on the network, the fourth condition information is used to indicate a second prerequisite that the network meets before the NMS performs the management operation on the network, the second constraint is different from the first constraint, and the second prerequisite is different from the first prerequisite.

19. An intent execution apparatus, wherein the intent execution apparatus comprises:
at least one processor and a memory, wherein
the memory stores program instructions, and the program instructions are executed by the at least one processor, to implement a function of the network management system NMS in the method according to any one of claims 1 to 13.

20. An intent execution apparatus, wherein the intent execution apparatus comprises:
at least one processor and a memory, wherein
the memory stores program instructions, and the program instructions are executed by the at least one processor, to implement a function of the business support system BSS in the method according to any one of claims 14 to 18.

21. A computer-readable storage medium, wherein the computer-readable storage medium stores program instructions; and when the program instructions are run, a function of the network management system NMS in the method according to any one of claims 1 to 13 is implemented.

22. A computer-readable storage medium, wherein the computer-readable storage medium stores program instructions; and when the program instructions are run, a function of the business support system BSS in the method according to any one of claims 14 to 18 is implemented.
